# EUROPEAN PATENT APPLICATION

(11) **EP 4 827 183 A1**
(43) Date of publication of application: **21.10.2026**
(21) Application number: 25742252.7
(22) Date of filing: 16.01.2025
(51) Int. Cl.: H04W 52/02, H04W 76/28, H04W 76/27

(54) **METHOD AND DEVICE FOR RECEIVING WAKE-UP SIGNAL BY TERMINAL HAVING WAKE-UP RECEIVER IN WIRELESS COMMUNICATION SYSTEM**

(30) Priority: 19.01.2024 KR 20240008672
(71) Applicant: Samsung Electronics Co., Ltd., Suwon-si, Gyeonggi-do 16677 (KR)
(72) Inventor: YANG, Hyewon, Suwon-si, Gyeonggi-do 16677 (KR); RYU, Hyunsuk, Suwon-si, Gyeonggi-do 16677 (KR); LEE, Jaewon, Suwon-si, Gyeonggi-do 16677 (KR); CHOI, Seunghoon, Suwon-si, Gyeonggi-do 16677 (KR)
(74) Representative: Gulde & Partner
(86) International application number: PCT/KR2025/000956
(87) International publication number: WO 2025/155113

(57) **Abstract**

The present disclosure relates to a 5G or 6G communication system for supporting higher data transmission rates. In addition, the present disclosure relates to a method performed by a base station and a terminal in a wireless communication system and proposes a method and a device for transmitting and receiving a wake-up signal (WUS), which may be commonly received regardless of the type of wake-up receiver (WUR).

## Description

### Technical Field

The disclosure relates to a wireless communication system and, in particular, to a method, a procedure, and a device for receiving a wake-up signal by terminals having a wake-up receiver, based on the implementation of the wake-up receiver.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources. With the advance of mobile communication systems as described above, various services can be provided, and accordingly there is a need for ways to effectively provide these services, in particular, ways to reduce power consumption of terminals.

### Disclosure

### Technical Problem

The disclosure provides a method and a device for transmitting a common WUS that is receivable regardless of the type of a wake-up receiver (WUR), so as to reduce the power consumption of a terminal having a wake-up receiver in a wireless communication system.

### Technical Solution

According to an embodiment of the disclosure for achieving the task, a method performed by a terminal in a communication system includes receiving a wake-up signal (WUS) transmitted from a base station, obtaining WUS information, based on the received WUS, and waking up a main radio receiver or maintaining a sleep mode of a main radio, based on the WUS information, wherein the WUS is configured for an on-off keying (OOK)-based wake-up receiver (WUR) and an orthogonal frequency division multiplexing (OFDM)-based WUR.

Manchester coding may be applied to the WUS, one or M OOK pulses of the WUS may be included within an OFDM symbol duration, and M may include 2 and 4. In addition, the WUS may be based on a particular OFDM sequence within a pulse duration corresponding to an on pulse, and the particular OFDM sequence may be configured by the base station or may be one sequence in an OFDM sequence set.

In addition, a method performed by a base station in a communication system includes determining whether to transmit wake-up signal (WUS) information to a terminal through a WUS, and in case that the WUS is required to be transmitted, transmitting a WUS corresponding to the WUS information to the terminal, wherein the WUS information is related to whether to wake up a main radio receiver of the terminal or maintain a sleep mode of a main radio, and wherein the WUS is configured for an on-off keying (OOK)-based wake-up receiver (WUR) and an orthogonal frequency division multiplexing (OFDM)-based WUR.

In addition, a terminal in a communication system includes a transceiver, and a controller, wherein the controller is configured to receive a wake-up signal (WUS) transmitted from a base station, obtain WUS information, based on the received WUS, and wake up a main radio receiver or maintain a sleep mode of a main radio, based on the WUS information, and wherein the WUS is configured for an on-off keying (OOK)-based wake-up receiver (WUR) and an orthogonal frequency division multiplexing (OFDM)-based WUR.

In addition, a base station in a communication system includes a transceiver and a controller, wherein the controller is configured to determine whether to transmit wake-up signal (WUS) information to a terminal through a WUS, and in case that the WUS is required to be transmitted, transmit a WUS corresponding to the WUS information to the terminal, wherein the WUS information is related to whether to wake up a main radio receiver of the terminal or maintain a sleep mode of a main radio, and wherein the WUS is configured for an on-off keying (OOK)-based wake-up receiver (WUR) and an orthogonal frequency division multiplexing (OFDM)-based WUR.

### Advantageous Effects

The disclosure provides a method and a device for transmitting a common WUS that is receivable regardless of the type of a WUR, so as to reduce the power consumption of a terminal by using a WUS and a WUR, and the terminal may receive the common WUS regardless of the type of the WUR that the terminal has.

### Description of Drawings

FIG. 1 illustrates an example of a basic structure of a time-frequency resource domain in a wireless communication system.
FIG. 2 illustrates an example of a beam sweeping operation and a time domain mapping structure of a synchronization signal in a wireless communication system.
FIG. 3 illustrates an example of a random access procedure in a wireless communication system.
FIG. 4 illustrates an example of a procedure in which a UE reports UE capability information to a base station in a wireless communication system.
FIG. 5 illustrates an example of an operation in which a base station indicates, through a WUS, switching of a main radio state of a UE having a WUR.
FIG. 6 is a diagram illustrating an example of a structure of a WUS transmitter and a WUS transmission process.
FIG. 7 is a diagram illustrating an example of a structure of a WUS receiver (or WUR) and a WUS reception process.
FIG. 8 is a diagram illustrating another example of a structure of a WUS receiver and a WUS reception process.
FIG. 9 is a diagram illustrating a method by which each receiver receives information when wake-up receivers that receive signals in different methods coexist.
FIG. 10 is a diagram illustrating an example of a relationship between an OFDM symbol used in a legacy system and a pulse duration of a WUS when a base station transmits the WUS.
FIG. 11 is a diagram illustrating an example of a method of transmitting and receiving identical information regardless of the type of a WUR without considering position information of an ON pulse in a reference time unit.
FIG. 12 is a diagram illustrating an example of a method of transmitting and receiving identical information regardless of the type of a WUR by utilizing position information of an ON pulse in a reference time unit when multiple OFDM sequences are configured for WUS transmission.
FIG. 13A is a diagram illustrating an example of an operation of a terminal receiving a common wake-up signal (WUS).
FIG. 13B is a diagram illustrating an example of an operation of a terminal receiving a common wake-up signal (WUS).
FIG. 14 is a diagram illustrating an example of an operation of a base station transmitting a common wake-up signal.
FIG. 15 is a block diagram illustrating a structure of a UE according to an embodiment of the disclosure.
FIG. 16 is a block diagram illustrating a structure of a base station according to an embodiment of the disclosure.

### Mode for Invention

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The higher signaling may also be understood as radio resource control (RRC) signaling or a media access control (MAC) control element (CE).

In the following description, terms and names defined in the 3GPP new radio (3GPP NR, 5th generation mobile communication standards) specifications are used for the sake of descriptive convenience. However, the disclosure is not limited by these terms and names, and may be applied in the same way to systems that conform other specifications. In addition, the term "terminal" may refer to not only cellular phones, smartphones, IoT devices, and sensors, but also other wireless communication devices.

As used hereinafter, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. Of course, the disclosure is not limited to the above examples. As used in the following description of the disclosure, the uplink (UL) may refer to a radio link via which a user equipment transmits data or control signals to a base station, and the downlink (DL) may refer to a radio link via which the base station transmits data or control signals to the user equipment.

Hereinafter, the term "A/B" may be understood as A or/and B.

In order to process mobile data traffic which has recently increased exponentially, initial standards of new radio (NR) access technology or 5th generation (5G) systems which are next generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems mainly aim to provide ultrahigh speed data services up to several Gbps by using ultrawide bandwidths far wider than the same. Accordingly, the 5G system considers ultrahigh-frequency bands ranging from several GHz to a maximum of 100GHz, in which it is relatively easy to secure ultrawide -bandwidth frequencies, as candidate frequencies. Additionally, it is possible to secure broad-bandwidth frequencies for the 5G system through frequency rearrangement or allocation among frequency bands ranging from hundreds of MHz to several GHz used in legacy mobile communication systems.

Radio waves in ultrahigh frequency bands have millimeter-level wavelengths and thus are also referred to as millimeter waves (mmWave). However, the pathloss of radio waves in ultrahigh frequency bands increases in proportion to the frequency band, thereby reducing the coverage of the mobile communication systems.

In order to overcome the shortcoming of coverage reduction in ultrahigh frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of transmission and reception nodes. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a gNB to multiple UEs in the system, such as a synchronization signal, a physical broadcast channel (PBCH), and system information, in order to increase the coverage. In case that the beamforming technology is applied to a common signal, a beam sweeping technology is additionally applied such that the signal is transmitted after changing the beam direction, thereby ensuring that the common signal can reach a UE existing at a specific location inside the cell.

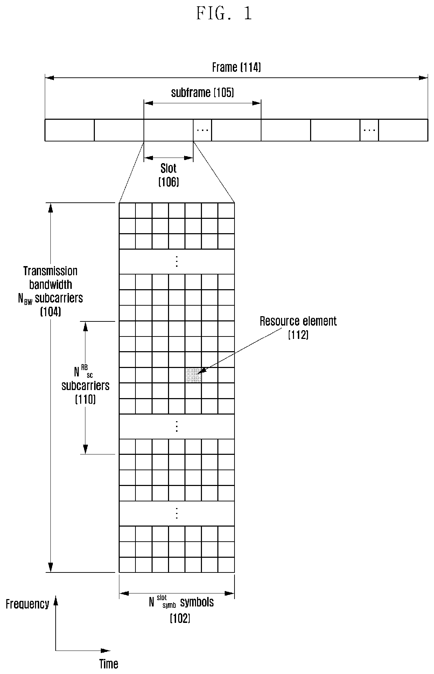

As another requirement for the 5G system, an ultra-low latency service is required such that the transmission delay between the transmission and reception ends is about 1ms. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A. FIG. 1 illustrates an example of a basic structure of a time-frequency resource domain in a wireless communication system. FIG. 1 illustrates a basic structure of a time-frequency resource domain which is a radio resource domain used to transmit data or control channels in a 5G system.

Referring to FIG. 1, the horizontal axis denotes the time domain, and the vertical axis denotes the frequency domain in FIG. 1. The minimum transmission unit in the time domain of the 5G system is an orthogonal frequency division multiplexing (OFDM) symbol, a group of ${N}_{symb}^{slot}$ symbols 102 may constitute one slot 106, and a group of ${N}_{slot}^{subframe}$ slots may constitute one subframe 105. The length of one subframe may be 1.0ms, and a group of ten subframes may constitute a 10ms frame 114. The minimum transmission unit in the frequency domain is a subcarrier, and a total of NBW subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive ${N}_{sc}^{RB}$ subcarriers 110 in the frequency domain. In the 5G system, ${N}_{sc}^{RB} = 12$, and the data rate may increase in proportion to the number of RBs scheduled for a UE.

In the 5G system, the base station may map data in units of RBs, and may generally schedule RBs which constitute one slot with regard to a specific UE. For example, the basic time unit to perform scheduling in the 5G system may be a slot, and the basic frequency unit to perform scheduling may be an RB. The number of OFDM symbols, ${N}_{symb}^{slot}$, is determined according to the length of a cyclic prefix (CP) which is added to each symbol in order to prevent inter-symbol interference. For example, if a normal CP is applied, ${N}_{symb}^{slot} = 14$ and, if an extended CP is applied, ${N}_{symb}^{slot} = 12$. The extended CP is applied to a system having a larger radio-wave transmission distance than the normal CP, thereby maintaining inter-symbol orthogonality. In the case of the normal CP, the ratio between the CP length and the symbol length may be maintained at a constant value, so that the overhead due to the CP may remain constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in the 5G system, various frame structures may be supported by adjusting the subcarrier spacing. For example,

In terms of the operating frequency band, the larger the subcarrier spacing, the more advantageous for restoration of phase noise in high-frequency bands.

In terms of the transmission time, the larger the subcarrier spacing, the smaller the symbol length in the time domain, and thus the resulting smaller slot length makes it more advantageous to support an ultra-low-latency service such as URLLC.

In terms of the cell size, the larger the CP length, the larger cell can be supported, meaning that the smaller the subcarrier spacing, the larger cell can be supported. The term "cell" refers to a region covered by one base station in connection with mobile communication.

The subcarrier spacing, the CP length, and the like correspond to information indispensable to OFDM transmission/reception, and a base station and a UE need to recognize the subcarrier spacing, the CP length, and the like as mutually common values in order to enable efficient transmission/reception. Table 1 enumerates the relationship between the subcarrier spacing configuration (*µ*), the subcarrier spacing (Δ*f*), and the CP length supported in the 5G system.

**Table 1**

| µ | Δ*f* = 2*^{µ}* · 15 [*kHz*] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 2 below enumerates the number ( ${N}_{symb}^{slot}$) of symbols per one slot, the number( ${N}_{symb}^{slot}$) of slots per one frame, and the number ( ${N}_{slot}^{subframe , μ}$) of slots per one subframe with regard to each subcarrier spacing configuration (*µ*) in the case of a normal CP.

**Table 2**

| ***µ*** | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below enumerates the number ( ${N}_{symb}^{slot}$) of symbols per one slot, the number ( ${N}_{slot}^{frame , μ}$) of slots per one frame, and the number ( ${N}_{slot}^{subframe , μ}$) of slots per one subframe with regard to each subcarrier spacing configuration (*µ*) in the case of an extended CP.

**Table 3**

| *µ* | ${N}_{symb}^{slot}$ | ${N}_{slot}^{frame , μ}$ | ${N}_{slot}^{subframe , μ}$ |
|---|---|---|---|
| 2 | 12 | 40 | 4 |

It is expected that the 5G system, in the early state of introduction, will at least coexist with legacy LTE and/or LTE-A (hereinafter, referred to as LTE/LTE-A) systems or operate in a dual mode. Accordingly, legacy LTE/LTE-A may provide stable system operations to UEs, and 5G systems may play the role of providing improved services to UEs. Therefore, the frame structure of 5G systems needs to include at least the frame structure of LTE/LTE-A or an essential parameter set (subcarrier spacing = 15kHz). For example, a comparison between a frame structure having a subcarrier spacing configuration µ=0 (hereinafter, referred to as frame structure A) and a frame structure having a subcarrier spacing configuration µ=1 (hereinafter, referred to as frame structure B) shows that, compared with frame structure A, frame structure B has double the subcarrier spacing and RB size and half the slot length and symbol length. In the case of frame structure B, two slots may constitute one subframe, and 20 subframes may constitute one frame.

To generalize the framed structure of 5G systems, the subcarrier spacing, the CP length, the slot length, and the like (essential parameter set) are integer multiples with each other with regard to each frame structure, thereby providing a high degree of extendibility. In addition, a subframe having a fixed length of 1ms may be defined to represent a reference time unit unrelated to the frame structure.

The frame structure may be applied according to various scenarios. In terms of the cell size, the larger the CP length, the larger cell can be supported, meaning that the smaller the subcarrier spacing, the larger cell can be supported. In terms of the operating frequency band, the larger the subcarrier spacing, the more advantageous to high-frequency-band phase noise restoration, meaning that frame structure B may support a higher operating frequency than frame structure A. In terms of the service, the smaller the slot length (basic time unit of scheduling), the more advantageous for supporting an ultra-low latency service (for example, URLLC). Therefore, frame structure B may be more appropriate for the URLLC service than frame structure A.

In an initial access step in which a user equipment initially accesses a system, the user equipment may perform downlink time and frequency domain synchronization and acquire a cell identifier (ID) from a synchronization signal, transmitted by a base station, through a cell search. In addition, the UE may receive a physical broadcast channel (PBCH) by using the acquired cell ID and acquire a master information block (MIB) as mandatory system information from the PBCH. Additionally, the UE may receive system information transmitted by the base station to acquire cell-common transmission and reception-related control information. The cell-common transmission and reception-related control information may include random access-related control information, paging-related control information, common control information for various physical channels, etc.

A synchronization signal is a signal that serves as a reference for a cell search, and for each frequency band, a subcarrier spacing appropriate for a channel environment, such as phase noise, may be applied. For a data channel or a control channel, in order to support various services as described above, a subcarrier spacing may be applied differently depending on a service type.

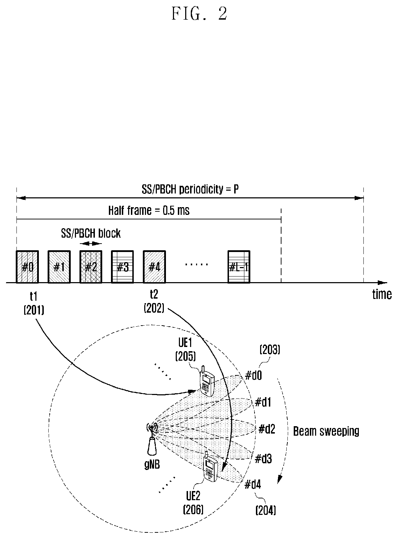

FIG. 2 illustrates an example of a beam sweeping operation and a time domain mapping structure of a synchronization signal in a wireless communication system.

For description purposes, the following elements may be defined. Obviously, the examples given below are not limiting.

Primary synchronization signal (PSS): A PSS is a signal that serves as a reference for DL time/frequency synchronization and provides a part of cell ID information.

Secondary synchronization signal (SSS): An SSS serves as a reference for DL time/frequency synchronization, and provides the other part of the cell ID information. Additionally, the SSS may serve as a reference signal for PBCH demodulation of a PBCH.

PBCH: A PBCH provides an MIB which is mandatory system information necessary for the UE to transmit/receive data channels and control channels. The mandatory system information may include search space-related control information indicating radio resource mapping information of a control channel, scheduling control information for a separate data channel for transmission of system information, a system frame number (SFN) which is a frame unit index that serves as a timing reference, and other information.

Synchronization signal/PBCH block (SS/PBCH block) or SSB: An SS/PBCH block includes N OFDM symbols and is configured by a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periodicity P. The base station may inform a UE of periodicity P via signaling. If there is no separate signaling of periodicity P, the UE may apply a preappointed default value.

Referring to FIG. 2, FIG. 2 illustrates an example in which beam sweeping is applied in units of SS/PBCH blocks over time. In the example of FIG. 2, UE 1 205 may receive an SS/PBCH block by means of a beam emitted in direction #d0 203 by beamforming applied to SS/PBCH block #0 at time point t1 201. In addition, UE 2 206 receives an SS/PBCH block by means of a beam emitted in direction #d4 204 by beamforming applied to SS/PBCH block #4 at time point t2 202. The UE may acquire, from the base station (gNB), an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

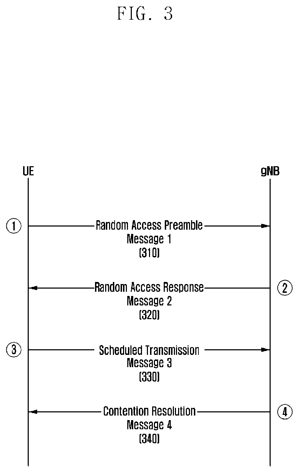

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates an example of a random access procedure in a wireless communication system.

Referring to FIG. 3, in a first step 310 of the random access procedure, the UE may transmit a random access preamble to the base station (gNB). The random access preamble, which is a message initially transmitted by the UE in the random access procedure, may be referred to as message 1. The gNB may measure a transmission delay value between the UE and the base station from the random access preamble, and may make uplink synchronization. The UE may then arbitrarily select the random access preamble to be used, from a random access preamble set given by system information in advance. In addition, the initial transmission power of the random access preamble may be determined according to the pathloss between the gNB and the UE, which is measured by the UE. Also, the UE may determine the transmission beam direction of the random access preamble from a synchronization signal received from the gNB and transmit the random access preamble.

In a second step 320, the gNB transmits an uplink transmission timing adjustment command to the UE, based on the transmission delay value measured from the random access preamble received in the first step 310. A message transmitted in the second step may be referred to as a random access response (RAR) or message 2. The gNB may also transmit uplink resources to be used by the UE and a power control command as scheduling information. The scheduling information may include control information regarding an uplink transmission beam of the UE.

If the UE fails to receive a random access response (RAR) which is scheduling information regarding message 3 from the gNB within a predetermined time in the second step 320, the UE may perform the first step 310 again. If performing the first step 310 again, the UE may transmit the random access preamble after increasing the transmission power thereof by a predetermined step (power ramping), thereby increasing the probability that the gNB will receive the random access preamble.

In a third step 330, the UE transmits uplink data (message 3) including the UE's ID to the gNB through a physical uplink shared channel (PUSCH) by using uplink resources assigned in the second step 320. The transmission timing of the PUSCH for transmitting message 3 may follow a timing control command received from the base station in the second step 320. The transmission power of the PUSCH for transmitting message 3 may be determined in consideration of a power control command received from the gNB in the second step 320 and the power ramping value of the random access preamble. The PUSCH for transmitting message 3 may refer to an uplink data signal initially transmitted to the gNB by the UE after the UE has transmitted a random access preamble.

In a fourth step 340, upon determining that the UE has performed random access without colliding with other UEs, the gNB transmits data (message 4) including the ID of the UE which has transmitted uplink data in the third step 330 to the corresponding UE. Upon receiving a signal transmitted by the base station in the fourth step 340, the UE may determine that the random access is successful. In addition, the UE may transmit HARQ-ACK information to the gNB through a physical uplink control channel (PUCCH) so as to indicate whether message 4 is successfully received or not.

If the gNB fails to receive a data signal from the UE due to collision between data transmitted by the UE in the third step 330 and data from another UE, the gNB may no longer transmit data to the UE. If the UE thus fails to receive data transmitted from the gNB in the fourth step 340 within a predetermined time, the UE may determine that the random access procedure has failed and may restart from the first step 310.

Upon successfully completing the random access procedure, the UE is switched to a connected state, and one-to-one communication between the gNB and the UE becomes possible. The gNB may receive UE capability information reported by the UE in a connected state and may adjust scheduling with reference to the UE capability information from the UE. The UE may inform the gNB of whether the UE supports a specific function or not, the maximum allowed value of the function supported by the UE, and the like through the UE capability information. Therefore, UE capability information reported to the base station by each UE may have a different value for each UE.

As an example of the UE capability information, the UE may report UE capability information including at least one of control information below to the base station. Obviously, the examples given below are not limiting.
Control information regarding a frequency band supported by the UE
Control information regarding a channel bandwidth supported by the UE
Control information regarding a maximum modulation scheme supported by the UE
Control information regarding a maximum number of beams supported by the UE
Control information regarding a maximum number of layers supported by the UE
Control information regarding channel state information (CSI) reporting supported by the UE
Control information regarding whether the UE supports frequency hopping
Control information regarding a bandwidth when carrier aggregation (CA) is supported
Control information regarding whether cross-carrier scheduling is supported when CA is supported

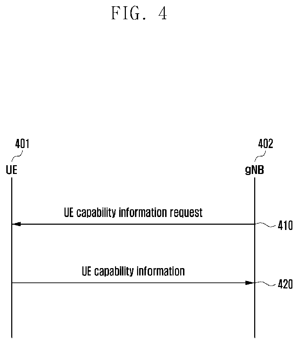

FIG. 4 illustrates an example of a procedure in which a UE reports UE capability information to a base station in a wireless communication system.

Referring to FIG. 4, in step 410, the base station (gNB) 402 may transmit a UE capability information request message to the UE 401. At the UE capability information request of the gNB, the UE transmits UE capability information to the gNB in step 420.

Through the above-described process, the UE connected to the gNB may conduct one-to-one communication as a UE in an RRC_CONNECTED state. To the contrary, the UE having no connection may be a UE in an RRC_IDLE state, and operations of the UE in the RRC_IDLE state may be classified as follows. Obviously, examples given below are not limiting.
Operation of perform a UE-specific discontinuous reception (DRX) cycle operation configured by the higher layer
Operation of receiving a paging message from the core network
Operation of acquiring system information
Operation of performing a neighboring cell-related measurement operation and cell reselection

In the 5G system, a new UE state referred to as RRC_INACTIVE has been defined to reduce the energy and time consumed for the UE's initial access. In addition to the operations performed by an RRC_IDLE UE, the RRC_INACTIVE UE may perform operations below. Obviously, examples given below are not limiting.
Operation of storing access stratum (AS) information necessary for cell access
Operation of performing a UE-specific DRX cycle operation configured by the RRC layer
Operation of configure a radio access network (RAN)-based notification area (RNA) which may be used during a handover by the RRC layer, and periodically performing update
Operation of monitoring a RAN-based paging message transmitted through an inactive-radio network temporary identifier (I-RNTI)

Hereinafter, a scheduling method in which the base station transmits downlink data to the UE or indicates uplink data transmission of the UE will be described.

Downlink control information (DCI) refers to control information transmitted to from the base station to a UE through the downlink, and may include downlink data scheduling information or uplink data scheduling information regarding a specific UE. In general, the base station may independently channel-code DCI with regard to each UE and may transmit the same to each UE through a physical downlink control channel (PDCCH).

With regard to a UE to be scheduled, the gNB may apply and operate a predetermined DCI format according to the purpose, such as whether the same is scheduling information regarding downlink data (downlink assignment), whether the same is scheduling information regarding uplink data (uplink grant), or whether the same is DCI for power control.

The base station may transmit downlink data to the UE via a PDSCH which is a physical channel for downlink data transmission. Scheduling information such as detailed mapping locations in time and frequency domains of the PDSCH, the modulation scheme, HARQ-related control information, and power control information, may be provided from the base station to the UE through DCI related to downlink data scheduling information among DCI transmitted via a PDCCH.

The UE may transmit uplink data to the base station via a PUSCH which is a physical channel for uplink data transmission. Scheduling information such as detailed mapping locations in time and frequency domains of the PUSCH, the modulation scheme, HARQ-related control information, and power control information, may be provided from the base station to the UE through DCI related to uplink data scheduling information among DCI transmitted through a PDCCH.

A time-frequency resource to which a PDCCH is mapped is referred to as a control resource set (CORESET). The CORESET may be configured for all or part of frequency resources in a bandwidth supported by the UE in the frequency domain. One or multiple OFDM symbols may be configured as the CORESET in the time domain, and this may be defined as a control resource set (CORESET) duration. The base station may configure one or multiple CORESETs for the UE through higher layer signaling (e.g., system information, MIB, or RRC signaling). The description that a CORESET is configured for the UE may mean that information such as a CORESET identity, the CORESET's frequency location, or the CORESET's symbol length is provided to the UE. Pieces of information provided to the UE by the base station in order to configure a CORESET may include at least some of the pieces of information included in Table 4.

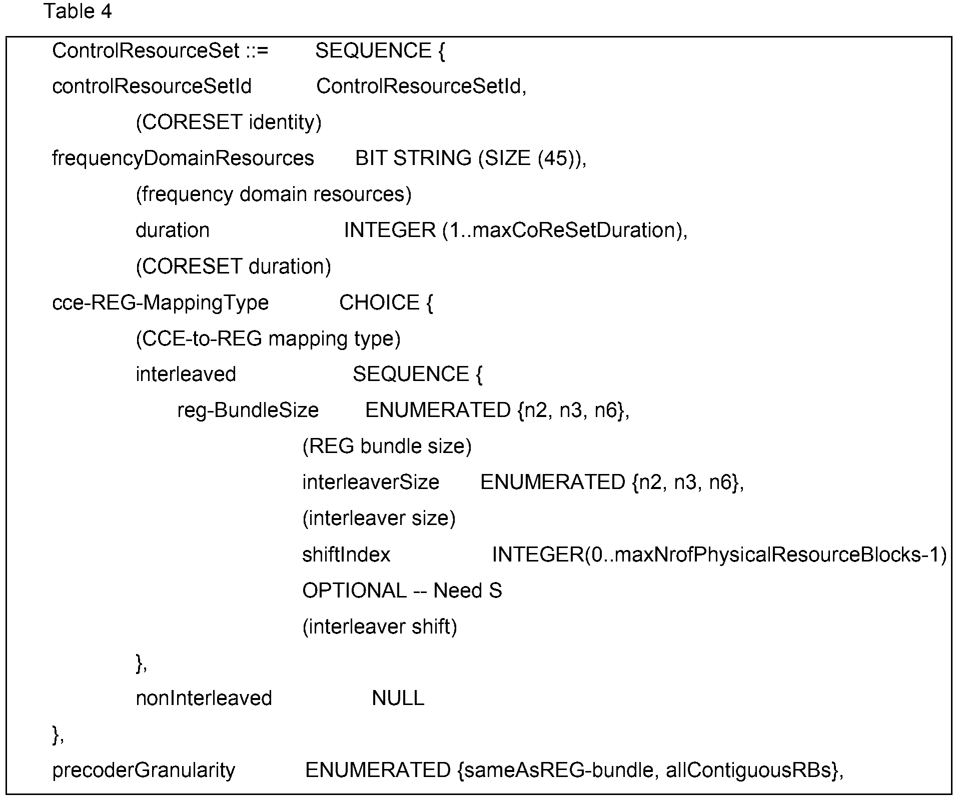

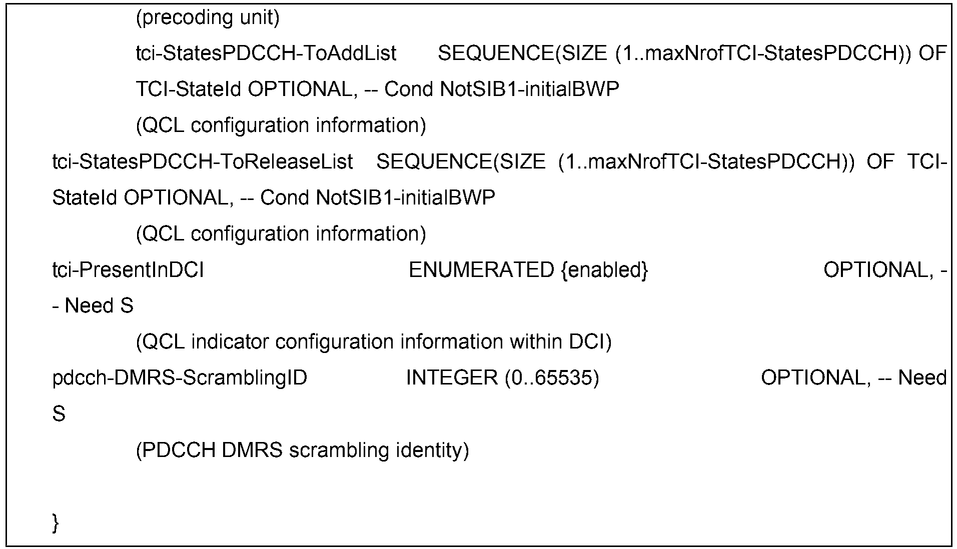

A CORESET may be configured by ${N}_{RR}^{CORESET}$ RBs in the frequency domain and may be configured by ${N}_{symb}^{CORESET} ∈ \left\{1, 2, 3\right\}$ symbols in the time domain. An NR PDCCH may be configured by one or multiple control channel elements (CCEs). One CCE may be configured by six resource element groups (REGs), and a REG may be defined as one RB during one OFDM symbol. In one CORESET, REGs may be indexed, starting from REG index 0, in the time-first order from the lowest RB of the first OFDM of the CORESET. As a PDCCH-related transmission method, an interleaved type and a non-interleaved type may be supported. The base station may configure, for the UE, whether interleaved or non-interleaved transmission is performed with regard to each CORESET through higher layer signaling. Interleaving may be performed in units of REG bundles. The REG bundle may be defined as one REG or a set of multiple REGs.

The base station may provide the UE with configuration information regarding to which symbol the PDCCH is mapped in the slot, the transmission period, and the like through signaling.

A description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured ALs.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

Configuration information of the search space for the PDCCH may be configured for the UE by the base station through higher layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a CORESET index for monitoring the search space, and the like. For example, parameters of the search space for the PDCCH may include the following pieces of information given in Table 5 below.

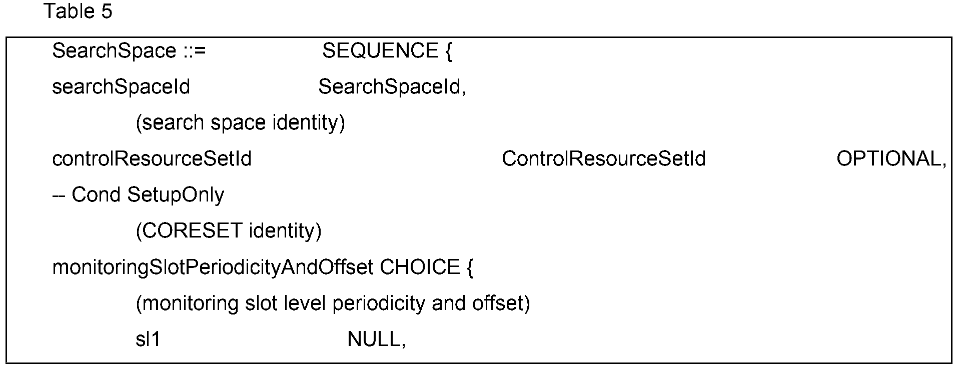

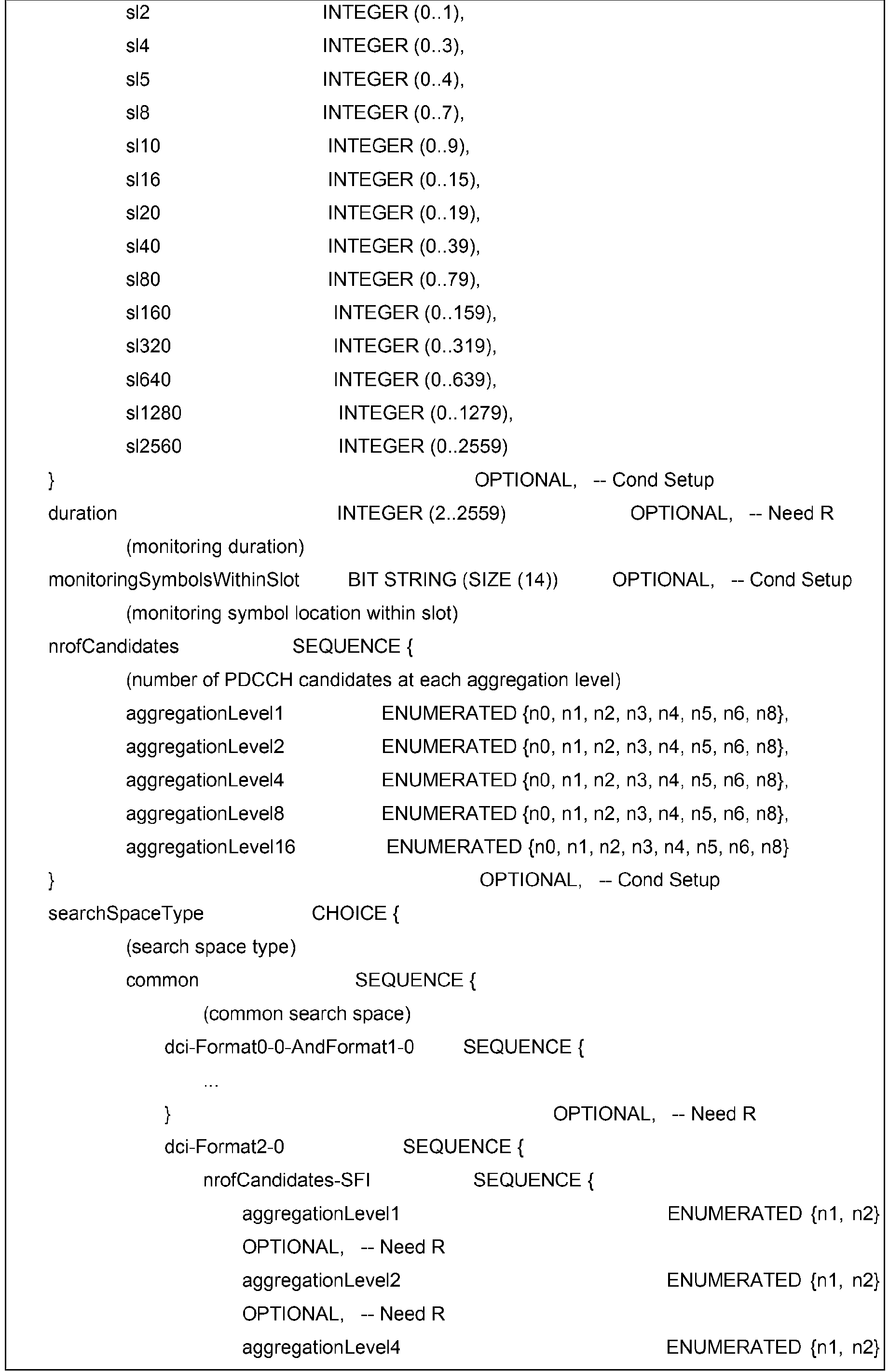

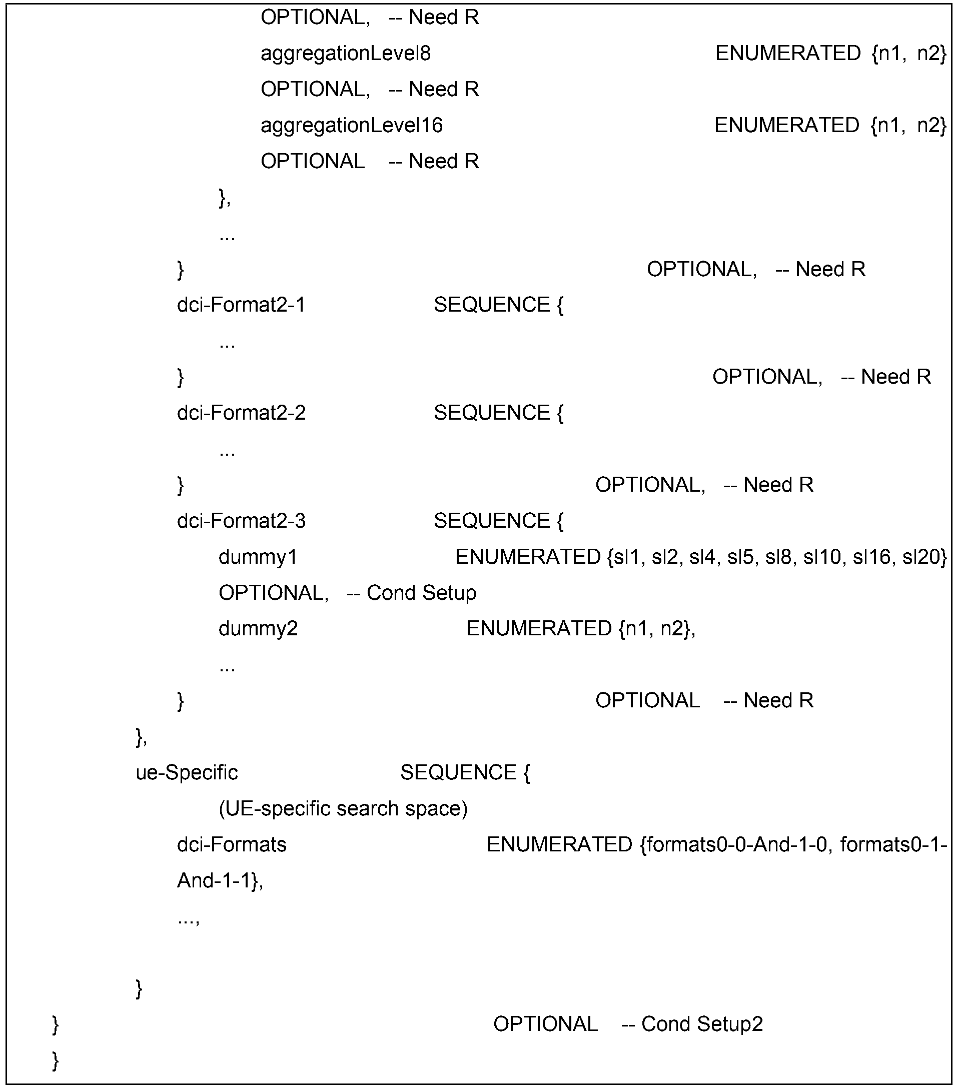

According to configuration information, the base station may configure one or multiple search space sets for the UE. According to an embodiment of the disclosure, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space. According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the example givens below are not limiting.
DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

In a UE-specific search space, the UE may monitor combinations of DCI formats and RNTIs given below. Obviously, the example givens below are not limiting.
DCI format 0_0/1_0 with CRC scrambled by C-RNTI, CS-RNTI, TC-RNTI
DCI format 1_0/1_1 with CRC scrambled by C-RNTI, CS-RNTI, TC-RNTI

The RNTIs enumerated above may follow the definition and usage given below.
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI(RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI(INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 6 below.

**Table 6**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sym bol(s) where UE may assume no transmission is intend ed for the UE |
| 2_2 | Transmission of TPC commands for PUCCH and PUS CH |
| 2_3 | Transmission of a group of TPC commands for SRS tra nsmissions by one or more UEs |

In the 5G system, the search space at aggregation level L in connection with control resource set p and search space set s may be expressed by Equation 1 below. [Equation 1] $L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$
L: aggregation level
n_{CI}: carrier index
N_{CCE,p}: total number of CCEs existing in control resource set *p*
${n}_{s , f}^{μ}$: slot index
${M}_{s , max}^{\left(L\right)}$: number of PDCCH candidates at aggregation level L
${m}_{s , {n}_{Cl}} = 0 , … , { M}_{s , max}^{\left(L\right)} - 1$: PDCCH candidate index at aggregation level L
i = 0, ..., L -1
${Y}_{p , {n}_{s , f}^{μ}} = \left({A}_{p}⋅{Y}_{p , {n}_{s , f}^{μ} - 1}\right) mod D$, Y_{p, - 1} = n_{RNTI} ≠ 0, Aₚ = 39827 for pmod3 = 0, Aₚ = 39829 for pmod3 = 1, Aₚ = 39839 for pmod3 = 2, D = 65537
n_{RNTI}: UE identity

The ${Y}_{p , {n}_{s , f}^{μ}}$ value may correspond to 0 in the case of a common search space.

The ${Y}_{p , {n}_{s , f}^{μ}}$ value may correspond to a value changed by the UE's identity (C-RNTI or ID configured for the UE by the base station) and the time index in the case of a UE-specific search space.

As described above, signal transmission/reception in ultrawide bandwidths of tens or hundreds of MHz or several GHz may be supported in order to accomplish ultrahigh speed data services at up to several Gbps in the 5G system. Signal transmission/reception in ultrawide bandwidths may be supported through a single component carrier (CC) or through a carrier aggregation (CA) technology using combinations of multiple CCs. In case that a mobile communication operator fails to ensure frequencies having bandwidths enough to provide ultrahigh speed data services by using a single CC, use of the CA technology may enable the mobile communication operator to increase the total sum of frequency bandwidths by combining respective CCs having a relatively small bandwidth size, thereby providing ultrahigh spoeed data services.

The 5G system is designed and developed for a variety of use cases. In addition to standby time, reliability, and availability, energy efficiency of the UE is very important in the 5G system. A 5G UE needs to be charged on a weekly or daily basis according to the individuals' usage time, and in general, the 5G UE consumes tens of mW in the RRC_IDLE/RRC_INACTIVE state, and consumes hundreds of mW in the RRC_CONNECTED state. Design for extending the battery life is an indispensable element not only for better user experiences but also for improved energy efficiency. Energy efficiency is more important to UEs having no continuous energy supply, for example, UEs using small rechargeable and single coin cell batteries. Among 5G use cases, sensors and actuators are arranged for monitoring, measurement, charging, and the like on a wide scale, and in general, batteries for sensors or actuators cannot be recharged and thus it is expected that these batteries need to last at least several years. In addition, wearable devices such as smartwatches, smart rings, eHealth-related devices, and medical monitoring devices can hardly last a maximum of 1-2 weeks, depending on the usage time.

As one of ways to reduce power consumption of the 5G UE, the UE may operate in a DRX mode. A UE to which DRX is applied may be periodically activated only at specific times to transmit/receive information. In this case, power consumption reduction of the UE depends on the length of period during which the UE is activated, for example, the paging cycle, and it is expected that an extended discontinuous reception (eDRX) cycle having a large value will be used to satisfy battery life requirements. However, the scheme using an eDRX cycle lengthens the battery life, based on a long idle time, and thus may not be suitable for services requiring a short idle time. For example, fire detection and fire extinguishing cases need to close fire shutters and activate sprinklers by actuators within 1-2 seconds from the point of time when the fire is detected by sensors. That is, in the idle time-critical use cases, the conventional long eDRX cycle cannot meet delay requirements, and thus use of the eDRA cycle may not be appropriate.

To identify whether there is data to be received, the 5G UE needs to periodically perform wake-up once per DRX cycle, which casues unnecessary power consumption in periods during which there is no signaling or data traffic. To solve this problem, if the UE is able to wake up only when activation of the UE is needed, such as when there is data, for example, paging information to be received by the UE, power consumption may be significantly reduced. This may be achieved by a method of monitoring a WUS by using a wake-up receiver (WUR) capable of monitoring a wake-up signal (WUS) with ultra-low power and, only when data transmission or reception is required, turning on (ON or triggering) a main radio (which may be understood as a conventional NR radio device or signal transmission/reception device capable of data communication by using cellular communication).

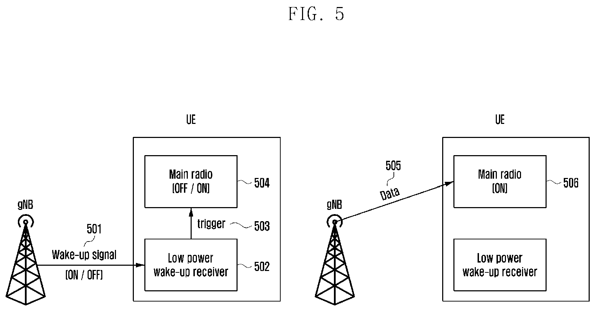

FIG. 5 is a diagram illustrating an example of an operation in which a base station indicates, through a WUS, switching of a main radio state of a UE having a WUR.

Referring to FIG. 5, when a base station transmits a WUS 501 corresponding to ON or OFF to a UE, the UE may receive the WUS 501 by using a WUR 502. The WUR may be a low-power WUR. According to whether the received signal indicates ON or OFF information, the UE may trigger (503) a main radio 504 in an OFF or ON state to wake up the main radio or configure the main radio to enter a power-off state. In some cases, the UE may not completely turn off the main radio 504 and configure the main radio to enter a deep sleep state where most of the components of the main radio are turned off and only necessary components including an internal clock and memory are operating.

If data traffic 505 to be transmitted to the UE by the base station is generated and a WUS corresponding to ON is transmitted from the base station to the UE, the main radio enters an ON state 506 and the UE may receive data transmitted by the base station through the main radio rather than the WUR. Power consumption for monitoring a WUS depends on a hardware module of a WUR used for WUS design and signal detection and processing. Therefore, maximized gains obtained by using a WUS and a WUR may be expected, particularly for power-sensitive and small form factor devices, including IoT use cases (such as industrial sensors and controllers) and wearables.

In designing a wake-up receiver enabling a UE to receive a WUS, various wake-up receivers may be designed based on a waveform or a modulation scheme of a wake-up signal and a corresponding reception method. For example, when the waveform of the WUS is designed using an on-off keying (OOK) modulation scheme, the UE (or WUR) may determine encoded bit information transmitted from a base station through a receiver equipped with an envelope detector that measures the envelope of the reception power of a signal. In this case, since phase information of the signal is unnecessary in a reception process of the signal, a phase synchronization circuit (phase-locked loop, PLL) for synchronizing the phase of the signal and a fast Fourier transform (FFT) module typically required in an OFDM receiver are also not needed. Therefore, since the receiver structure is relatively simple, the UE (or WUR) may operate with low power to receive the WUS and reduce the overall power consumption of the UE. However, due to effects such as attenuation caused by a wireless channel, the coverage is limited compared to other channels in an existing 5G system, and reception performance may only be guaranteed by consuming a large amount of resources in the time domain compared to OFDM-based signals. In the following description, the receiver that determines transmitted information, based on envelope measurement for the reception power of a signal is referred to as a low-power receiver A (WUR-A).

Another WUS waveform may be designed by using an existing OFDM-based modulation scheme. A transmitter transmitting the WUS may transmit the WUS in the same method as existing OFDM-based synchronization signals and reference signals by mapping a sequence corresponding to WUS information to be transmitted onto subcarriers allocated for WUS transmission in an inverse fast Fourier transform (IFFT) module used for OFDM-based signal transmission. However, a receiver receiving the WUS may determine whether the WUS is received and the operation of the main radio by using a cross-correlator in the time domain without an FFT module, or, if the FFT module is embedded in the WUR according to an implementation, may perform the above operation in the frequency domain through the FFT module. Unlike an OOK-based WUS, receiving an OFDM-based WUS requires an in-phase and quadrature branch (IQ branch) and a PLL to receive complex-valued information. However, the components may have lower performance but lower power consumption than those installed in the main radio, and other components may also have lower performance but relatively less power consumption, whereby consumed power may be reduced compared to the main radio. Furthermore, when the WUS is received using a cross-correlator in the time domain, the WUS may be received without an FFT module, which may further reduce power consumption. A receiver that determines transmitted information, based on reception of a complex baseband signal in the time domain or frequency domain by using an IQ branch and a PLL as described above is referred to as a low-power receiver B (WUR-B).

Assuming that WURs are activated for the same time to receive a WUS, in comparison of required average power, the WUR-B inevitably requires relatively higher average power than the WUR-A. Accordingly, in terms of the overall power reduction gain of the UE, the WUR-A provides a greater advantage. However, in comparison in terms of WUS reception capability, that is, in terms of coverage, performance of the WUR-B is superior to performance of the WUR-A, and thus, when the WUR-B is used, a WUS transmitted by the base station may be more stably received over a wider area. Therefore, depending on characteristics such as a use purpose of the UE, a power reduction gain, and mobility, there are cases in which the WUR-A is advantageous and cases in which the WUR-B is advantageous. For example, in a case of an IoT device including a semi-permanent battery and requiring extremely low power consumption, installation of the WUR-A is advantageous, and in a case of a UE such as a smartphone for which stable operation in a high-mobility environment is important, the WUR-B is advantageous. As described above, different WURs may be installed according to characteristics of the

UE.

Therefore, if the base station supports a WUS that is only receivable by one receiver structure among the WUR-A or the WUR-B, the WUR implementation of the UE and the attainable gains are limited. Meanwhile, a method in which the base station supports both a WUS receivable by the WUR-A and a WUS receivable by the WUR-B is also be considered. However, the method has a limitation in that the base station needs to know which type of WUR each UE is equipped with, in order to transmit a WUS corresponding to the WUR of each UE. If the base station does not have corresponding information, the base station is required to transmit both types of WUSs in order to wake up a single UE or a group of UEs. This may lead to a separate implementation for transmitting different types of WUSs and greater resource consumption.

In other words, from the base station's perspective, transmitting a single type of WUSs is more beneficial than generating and transmitting multiple types of WUSs. Therefore, considering both the convenience of the base station and the degree of freedom in WUR implementation of the UE, it is beneficial to design a WUS such that both UEs equipped with the WUR-A and UEs equipped with the WUR-B are able to receive a single type of WUSs.

In the following, through specific embodiments, a method for designing a common WUS such that a single WUS transmitted by a base station is receivable by UEs equipped with different types of WURs or by UEs that are able to receive a WUS in different methods, and a procedure for transmitting and receiving the common WUS by the base station and the UE are described in detail. In the following description, a WUS that is receivable by both WUR-A and WUR-B receivers is referred to as a common WUS or a harmonized WUS.

The base station or UE described in the disclosure may be replaced by any device that transmits (or receives) a WUS designed for the same purpose. For example, an entity transmitting the WUS may be another UE, and an entity receiving the WUS is not limited to the UE but may be considered as any device that receives the WUS. Accordingly, the design encompasses a design for not only a downlink WUS transmitted from the base station to the UE, but also an uplink WUS transmitted from the UE to the base station, and a sidelink WUS transmitted from the UE to another UE.

### <First embodiment>

A first embodiment of the disclosure provides methods in which a transmitter transmits a common wake-up signal regardless of the type of a wake-up receiver of the UE. More specifically, a method in which a transmitter transmits a common wake-up signal so that the UE receives same information regardless of the type of a wake-up receiver of the UE is described.

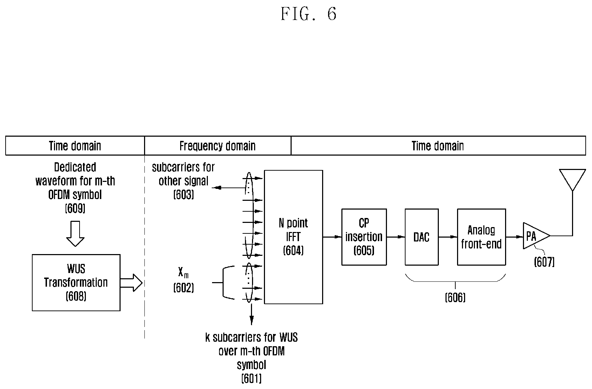

First, an overall method for transmitting and receiving a wake-up signal is described based on FIGS. 6 to 8.

FIG. 6 is a diagram illustrating an example of a structure of a WUS transmitter and a WUS transmission process.

Referring to FIG. 6, in order to transmit a common WUS, a method in which the transmitter maps specific values xₘ 602 to subcarriers 601 allocated for WUS transmission and transmits the mapped values and subcarriers may be considered. The specific values xₘ 602 may be obtained by applying a WUS transform 608 to a dedicated waveform 609 transmitted in an m-th OFDM symbol. The subscript m denotes a WUS transmitted in the m-th OFDM symbol, and a single WUS may be transmitted over one or multiple OFDM symbols. In addition, on other subcarriers 603 configuring a carrier other than the subcarriers for the WUS, a channel (or signal) for a different purpose may be transmitted together. After passing through an IFFT module 604, the WUS and the other channel undergo a series of processes including CP insertion 605, an analog signal adjustment process (a digital-to-analog converter (DAC)- and-analog front-end 606) including conversion to an analog signal, and signal amplification (a power amplifier 607), and are then transmitted.

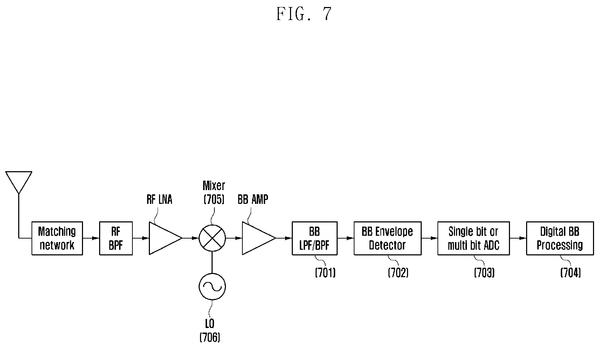

FIG. 7 is a diagram illustrating an example of a structure of a WUS receiver (or WUR) and a WUS reception process.

Referring to FIG. 7, the signal unrelated to the WUS is removed by a baseband (BB) band-pass filter (BPF) or low-pass filter (LPF) 701 of the receiver, so that the WUR receives only the signal in the band corresponding to the subcarriers on which the WUS is mapped. In this case, the band of the filter includes the frequency band of the subcarriers on which xₘ is mapped, and serves to minimize interference from the other signal mapped to adjacent subcarriers. In addition, the subcarrier positions on which the WUS is mapped may be freely configured by the base station, and corresponding information is provided to the WUS receiver in advance.

After the received signal passes through the baseband BPF or LPF 701, the WUS receiver measures the power magnitude of the received signal through an envelope detector (a BB envelope detector 702). The signal that has passed through the envelope detector 702 is digitized through a single-bit or multi-bit analog-to-digital converter (ADC) 703, and in a digital processing process (digital BB processing 704), the WUS receiver determines which bit information has been transmitted according to a specific criterion. If the number of bits used for the digitization is 1, a single-bit ADC is used as the ADC, and if same is 2 or more, a multi-bit ADC is used. A higher number of ADC bits allows for a more precise representation of the envelope magnitude, which is advantageous for determining information, whereas the receiver structure may become relatively more complex.

The example of FIG. 7 may also be regarded as an example of the aforementioned WUR-A, since in the example, which information has been transmitted is determined based on the power value of a transmitted signal in a specific interval. In this case, since phase information of the received signal is unnecessary, the WUS receiver may use a frequency-locked loop (FLL) instead of a PLL to convert a band-pass signal to a baseband signal with relatively low power through a mixer 705 and a local oscillator (LO) 706. In addition, the receiver may obtain the band-pass signal through an RF BPF and an RF low-noise amplifier (LNA). FIG. 7 illustrates an example of a WUS receiver, and certain components may be added or omitted. For example, the figure depicts a method of directly converting a received signal to baseband. However, a method of converting the signal to an intermediate-frequency signal and passing the converted signal through a filter in the band may also be considered.

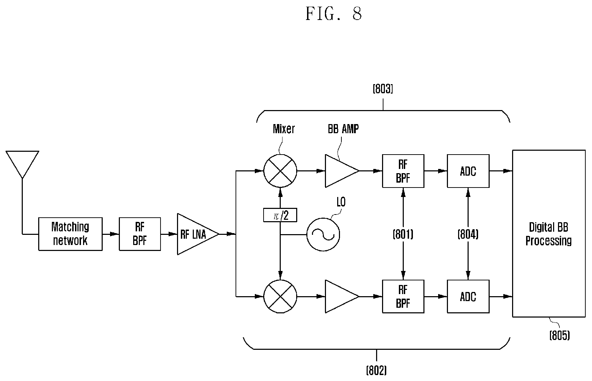

FIG. 8 is a diagram illustrating another example of a structure of a WUS receiver and a WUS reception process.

Referring to FIG. 8, unlike FIG. 7 where the WUS receiver was configured to have a single branch, the WUS receiver is configured to have two branches. The two branches are an I branch 802 and a Q branch 803, respectively, each for detecting a complex baseband signal. Therefore, FIG. 8 may also be regarded as an example of the aforementioned WUR-B. An LPF (or BPF) 801 and an ADC 804 perform the same functions as described in FIG. 7, with the differences being that a multi-bit ADC is typically used in the structure of FIG. 8, and that two LPFs 801 and two ADCs 804 are present since a signal of each branch needs to be received. The signals input to the I branch 802 and Q branch 803 may be separated through a PLL, a local oscillator (LO), and mixers, and the PLL is required since the signals are sensitive to frequency and phase errors when the signals are received with the structure.

Similar to FIG. 7, the signal unrelated to the WUS is removed by the LPFs 801 of the receiver, so that the WUR receives only the signal in the band corresponding to the subcarriers on which the WUS is mapped. In this case, the band of the filter includes the frequency band of the subcarriers on which xₘ is mapped, and serves to minimize interference from the other signal mapped to adjacent subcarriers. In addition, the subcarrier positions on which the WUS is mapped may be freely configured by the base station, and corresponding information is provided to the WUS receiver in advance.

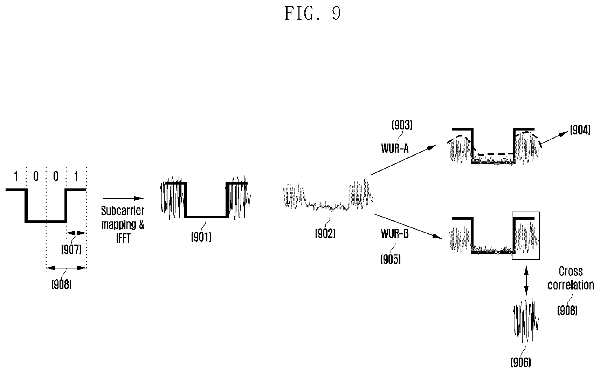

As described above, in a digital processing process 805, whether the WUS intended to be received has been transmitted may be detected through a cross-correlator in the time domain, or, the process 805 includes an FFT module, and thus whether xₘ 602 of FIG. 6 has been transmitted may be detected in the frequency domain. In this case, the structure of the receiver capable of receiving a corresponding signal may vary depending on what value is mapped to xₘ 602 and whether the WUR is aware of the value. FIG. 9 is a diagram illustrating a method by which each receiver receives information when wake-up receivers that receive signals in different methods coexist.

Referring to FIG. 9, it is assumed that when a transmitter desires to transfer a signal "1" in the m-th OFDM symbol, the transmitter maps an arbitrary value or a predefined specific sequence to xₘ, and when the transmitter desires to transfer a signal "0," the transmitter maps zero to all subcarriers. When the transmitter intends to transmit bit information of 1001, a WUS waveform in the time domain based on xₘ mapped to four OFDM symbols may be represented as 901. A receiver receives a waveform such as 902 due to the effects of attenuation and multipath caused by passage of a WUS wireless channel. A WUR-A 903 determines the bit information, based on an envelope 904 of a received signal. Therefore, even in a case where the WUR-A does not know information on xₘ, when a signal of "1" is transferred and the received signal has a certain level of power, the WUR-A 903 may distinguish whether information of 1 or a signal of "0" has been transferred.

Meanwhile, a WUR-B 905 determines whether the received information is "1" or "0," based on whether the specific sequence xₘ 602 mapped to the subcarriers has been transmitted. Therefore, the WUR-B 905 needs to know the information on xₘ 602 or information on a waveform 906 in the time domain when xₘ is mapped and passed through an IFFT process, in order to identify whether information corresponding to 1 has been received in the digital processing process 805 of the WUR-B. If the waveform that the WUR-B intends to detect is not received, the WUR-B 905 determines that "0" has been transmitted. In this case, the WUR-B 905 is assumed to know when the WUS is transmitted from the base station and reference time unit information through pre-configuration of information on a reference time unit 907 in which information of 1 or 0 is transmitted or through determination of the reference time unit information as a specific value. Therefore, when the received information is determined through cross-correlation 908 in the time domain, the WUR-B 905 may identify whether information representing 1 or information representing 0 has been transmitted, based on whether a cross-correlation result between a waveform received in the reference time unit 907, and 906 generated by the WUR-B 905 exceeds a threshold. If the WUR-B 905 has an FFT module, the WUR-B determines the corresponding information in the frequency domain.

In other words, when a waveform or information of a signal having specific power when the signal is transmitted is defined and corresponding information is also provided to the UE, a common WUS receivable by both the receiver 903 that determines information, based on the power value of a received signal and the receiver 905 that determines information, based on the degree of information matching for the received signal may be designed. In this case, the base station transmits the common WUS, and the UE may selectively implement a WUR operation, such as an operation of the WUR-A 903 or the WUR-B 905, when receiving the WUS. However, the WUS may be designed such that the same information or different information is transmitted through the WUS depending on the type of the WUR. In this embodiment, a method for designing a WUS such that the same information is received regardless of the type of a WUR is described.

When the WUR-A and WUR-B determines whether received bit information is 1 or 0, if there is no technique including a coding technique is applied, the receiver determines the information, based on a pre-configured threshold. For example, in a case of the WUR-A, the envelope of a received signal is compared with a threshold to determine whether information transmitted in each reference time unit 907 is 1 or 0, and in a case of the WUR-B, a cross-correlation value between the received signal and 906 is compared with a threshold to determine the transmitted information. In this case, the number of 906 may be one or more, and accordingly, the WUR-B may derive multiple cross-correlation values through multiple cross-correlation processes for the reference time unit 907 or through multiple cross-correlators. However, in general, configuring an appropriate threshold without channel information in a wireless communication environment where the channel varies is not easy. In addition, in the case of a WUS for the WUR-A, reception capability may be degraded since information is determined solely based on the power of the signal. To address these issues and achieve highly reliable signal transmission, a technique such as Manchester coding may be considered. Manchester coding is characterized by a voltage transition within the reference time unit 907 in which information is transmitted. For example, to transmit a signal of "1," a voltage waveform of "10" is generated, and to transmit a signal of "0," a voltage waveform of "01" is generated. Alternatively, in the opposite manner, "0" may correspond to "10" and "1" may correspond to "01." Referring to FIG. 9, when Manchester coding is not applied, the transmitted signal has a constant waveform, such as 0 or 1, for the reference time unit 907, whereas when Manchester coding is applied, a reference time unit in which information is transmitted is determined to be 908, and the signal is transmitted with the voltage level varying for the reference time unit. That is, in the case of FIG. 9, when Manchester coding is not applied, the transmitter transmits bit information of "1001," whereas when Manchester coding is applied, information of "10" is transmitted.

Therefore, when Manchester coding is used, reception performance may be improved, but more time resources are consumed to transmit the same bit information. Whether the base station has applied Manchester coding is assumed to be already known by the UE or the WUR. When Manchester coding is applied, the receiver determines whether a signal received for the reference time unit 908 is 1 or 0. Specifically, when Manchester coding is applied such that 1 corresponds to "10" and 0 corresponds to "01," the WUR-A 903 compares the power of a leading part and a trailing part of the received envelope with respect to a midpoint of the reference time unit 908, and determines 1 if the power of the leading part is greater and 0 if the power of the trailing part is greater. In the case of the WUR-B 905, 1 and 0 are determined by comparing a cross-correlation value between 906 and the leading part of the reference time unit 908 with a cross-correlation value between 906 and the trailing part.

In another method, if the cross-correlation result values of the leading part and the trailing part of the reference time unit both exceed or both fail to exceed a specific threshold, it may be determined that a channel state is unstable or no signal to be received by the UE has been transmitted. In such a case, when only one of the leading part and the trailing part exceeds the specific threshold, it may be determined that information of 1 or 0 has been received. In the following description, a unit in which bit information is transmitted is referred to as a "reference time unit," and a unit in which a waveform is transmitted in a physical channel is referred to as a pulse duration. That is, when Manchester coding is not applied, the reference time unit and the pulse duration are identical, whereas when Manchester coding is applied as in the above example, the reference time unit is twice the pulse duration.

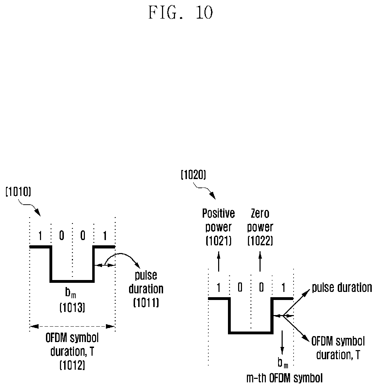

FIG. 10 is a diagram illustrating an example of a relationship between an OFDM symbol used in a legacy system and a pulse duration of a WUS when a base station transmits the WUS.

Referring to FIG. 10, both 1010 and 1020 illustrate examples of transmitting four pulses of "1001." 1010 illustrates a case where a pulse duration 1011 and a length 1012 of an OFDM symbol differ from each other. That is, in this case, multiple pulses may be transmitted in a single OFDM symbol. To this end, as illustrated in FIG. 6, a transmitted signal needs to undergo a special process called the WUS transform 608 in the time domain. A transmitter may derive xₘ 602 that is a set of values in the frequency domain through 608, the set enabling a WUS waveform 609 or 1013 to be transmitted in a specific m-th OFDM symbol to be generated in the time domain after the IFFT process 604. Examples of methods for performing the process 608 include FFT, which may be regarded as the inverse of IFFT, discrete Fourier transform (DFT), and the least square method. In the following description, the number of pulses transmitted in a single OFDM symbol is denoted as K. That is, 1010 illustrates an example where K is 4. 1020 illustrates an example where K is 1. When K is 1 as in 1020, the OFDM symbol duration and the pulse duration are identical, and thus four OFDM symbols are required for four pulses. When a single pulse is transmitted, whether a specific sequence is mapped to xₘ 602 is determined by whether an on-pulse (1) or an off-pulse (0) is transmitted. Therefore, when transmitting 1, the transmitter maps and transmits a sequence 1021 having a specific power, and when transmitting 0, the transmitter maps no sequence (1022), so that no signal is transmitted in the frequency domain corresponding to a WUS.

In the above example, when the number of information bits to be transmitted is denoted as P and the number of pulses required to transmit a single WUS is denoted as L, the relationship between L and P when Manchester coding is applied may be expressed as 2P = L. The number of OFDM symbols in which the WUS is transmitted is equal to a value obtained by dividing L by K and applying a ceiling function to a result. Alternatively, the pulse duration is equal to a value obtained by dividing the length of an OFDM symbol by K. Using these relationships, the receiver (or UE) may infer the number of OFDM symbols in which the WUS is transmitted or the pulse duration value from partially given information. Based on the inferred pulse duration and the number of OFDM symbols, the UE determines a value represented by a received waveform, determines an interval in which a single WUS is transmitted, and determines whether to wake up a main radio based on information received for the interval. Transmitting the same information regardless of the type of a WUR, i.e., regardless of whether the WUR is the WUR-A or the WUR-B, means that if information received by the WUR-A indicates a signal to wake up a UE (group) called a, information received by the WUR-B also indicates a signal to wake up the UE (group) called a. Alternatively, this means that even without knowing which specific UE (group) is to be woken up by a signal, when the WUR-A determines that the signal does not wake up a UE (group) called b, the WUR-B likewise receives a signal that does not wake up the UE (group) called b. This operation includes not only wake-up information for waking up a specific UE (group), but also all information that may be transmitted through the WUS. That is, the fact that a common WUS transmits the same information means that UEs for which the same wake-up ID, which is an identifier representing wake-up information, is configured perform the same operation after receiving the common WUS regardless of the type of the WUR. However, a method of receiving the common WUS may differ as described in FIGS. 7 to 9.

In the following description, for convenience, receiving the same information is described as receiving identical bit information or an identical pulse pattern. For example, when on/off pulse waveforms corresponding to "1001" and one or multiple pre-defined or -configured OFDM sequences corresponding to "1001" are mapped to respective pulses and transmitted, the WUR-A may determine that "1001" has been received through the on/off pulse waveforms, and the WUR-B may determine that "1001" has been received through cross-correlation with the pre-defined or pre-configured OFDM sequences. That is, an OFDM sequence is information required for the WUR-B to receive a WUS. Which UE is to be woken up by information of "1001" or what additional information is included in "1001" does not fall within the scope of the disclosure, and thus is not specifically described.

One method of transmitting the same information is to generate an on pulse of a WUS, based on one OFDM sequence. Referring to FIG. 9, a WUS having the same OFDM sequence in all the on pulses is generated. In addition, all UEs (specifically, UEs having the WUR-B) receiving a WUS in a cell in which the base station transmits a common WUS know only information on one OFDM sequence. The information may be defined in a specification, or the base station may configure a sequence candidate of multiple sequence candidates defined in the specification. The base station (or transmitter) transmits the corresponding OFDM sequence only in an on pulse and does not map any OFDM sequence to an off pulse. Accordingly, the WUR-B 605 may store only the information 906 corresponding to one pre-configured sequence, and determine whether a corresponding interval is an on pulse or an off pulse during a pulse duration through cross-correlation or a similar procedure. As illustrated in FIG. 9, when an on pulse indicates bit information of 1 and an off pulse indicates bit information of 0, the WUR-B 905 may receive bit information of "1001." Similarly, the WUR-A 903 may also determine that "1001" has been received, based on a magnitude of the envelope of a received signal during each pulse duration. In this case, the number of OFDM symbols required for transmitting and receiving a WUS, pulse duration information, the number of bits including information to be transferred through the WUS, and the like are identical regardless of the type of a WUR.

However, when only one OFDM sequence is used according to the above-described method, the WUS is designed such that the WUR-B may receive only 1 or 0, that is, 1-bit information, during a pulse duration. Since the WUR-B is more complex in hardware and consumes more power than the WUR-A, the WUR-B is able to receive more bits during the same time, that is, during a pulse duration or a reference time unit. For example, when one OFDM sequence is capable of transmitting 4 bits, the WUR-B may receive, through one on pulse, information that is to be received during four pulses, and power consumption required for the WUR-B to receive the WUS may be reduced by reducing the time required to receive the WUS. That is, a difference may occur between respective times required for the WUR-A and the WUR-B to receive an entire WUS to obtain identical information, and accordingly, a disadvantage of the WUR-B in terms of power consumption may be compensated for by the time difference.

A method of transmitting 4 bits through one OFDM sequence is to increase the number of OFDM sequence candidates transmittable during the same pulse duration to 16. That is, in order to transmit and receive N-bit information through transmission of one OFDM sequence, information on 2^{N} OFDM sequences (or 2^{N}-1 OFDM sequences when a particular information value is assigned to a case in which no OFDM sequence is transmitted) may be defined in a specification and provided to the base station and the UE, or the base station may provide the information to the UE. Alternatively, the base station may configure, for the UE, which OFDM sequences are valid from among all OFDM sequences defined for WUS transmission in the specification. A specific OFDM sequence generation method and the number of OFDM sequences are not described in this specification.

When the transmitter is to transmit information by mapping an appropriate sequence from among 2^{N} pre-configured OFDM sequence candidates in one pulse duration, an off pulse does not include any information unlike a case in which one OFDM sequence candidate is configured. That is, in order for the WUR-B (which may be interchangeably used with the UE) to receive information through a WUS, the WUS necessarily includes an on pulse, and when the UE does not know when an on pulse occurs in the WUS or how many on pulses occur in the WUS, not only an effect of reducing a time required for the WUR-B to receive the WUS is not achieved, but also variation occurs in WUS reception capability and reliability is reduced. Accordingly, when multiple OFDM sequence candidates applicable to one on-pulse transmission are defined, Manchester coding in which an on pulse necessarily appears in every reference time unit may be applied.

As an example, depending on whether Manchester coding is applied, the UE may estimate the number of OFDM sequences (or the number of OFDM sequence candidates) used by the base station. For example, when Manchester coding is not applied, even though multiple OFDM sequences are configured, the UE may estimate that only one particular sequence thereamong is to be transmitted, and the UE may receive the WUS according to a case in which an on pulse of the WUS is generated based on the particular OFDM sequence. The particular OFDM sequence may be predetermined, or may be configured by the base station. In addition, when Manchester coding is applied, the UE may receive the WUS on the assumption that one OFDM sequence from among multiple OFDM sequence candidates has been used.

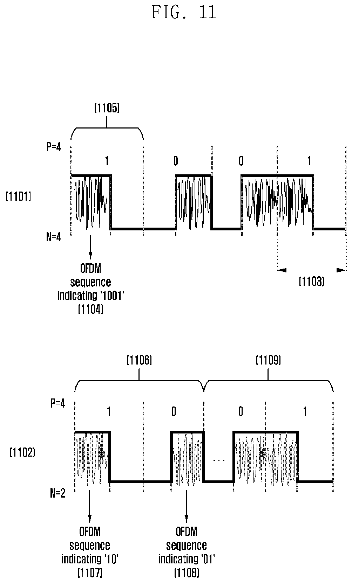

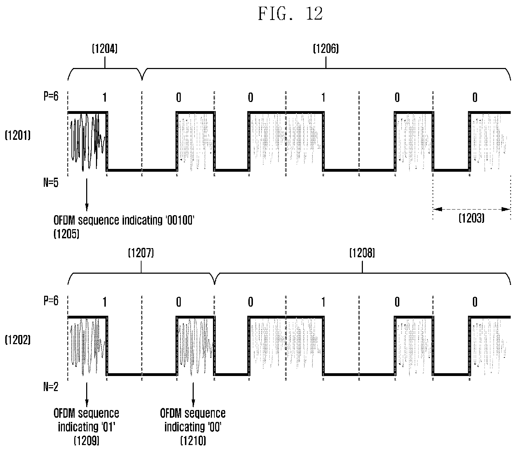

FIGS. 11 and 12 are diagrams illustrating a method of transmitting and receiving identical information regardless of a type of a WUR when multiple OFDM sequences are configured for WUS transmission. In FIGS. 11 and 12, P denotes the number of bits of information to be transferred through the WUS, and when a CRC bit is additionally transmitted through an on/off pulse together with WUS information, P may include or may not include the CRC bit. Information on whether the value of P includes the number of CRC bits, the number of CRC bits, and the like may be specified in advance in a specification or may be configured by the base station. In addition, N denotes the number of bits transmittable by the base station during one on-pulse duration by mapping one of 2^{N} OFDM sequence candidates. N may have a number equal to or greater than 1, and as the number of N increases, a time required for the WUR-B to receive the WUS may be reduced, and the UE may additionally reduce power by turning off the WUR when not receiving the WUS.

FIG. 11 is a diagram illustrating an example of a method of transmitting and receiving identical information regardless of the type of a WUR without considering position information of an ON pulse in a reference time unit.

FIG. 11 illustrates two examples of 1101 and 1102, and the UE may perform different operations according to configured P and N values. Referring to FIG. 11, since Manchester coding is applied and a WUS is transmitted, two pulse durations are included in one reference time unit 1103, and one of the pulses includes an on pulse.

In 1101 of FIG. 11, the number (N) of bits that may be indicated by an OFDM sequence transmitted in an on pulse is 4, which is the same as the number (P) of bits to be transmitted through the WUS. As such, when N is greater than or equal to P, the transmitter may transmit all bit information to be transmitted through the WUS through one on pulse. In the example of 1101, the transmitter is to transmit information of "1001" as an on/off pulse pattern, and thus the transmitter transmits an OFDM sequence 1104 corresponding to 1001 within a specific time 1105. In the example, a length of the specific time is a reference time unit, and an ordinal number of an on pulse in which the OFDM sequence is transmitted (i.e., a reference time unit in which the OFDM sequence is located or a time domain location at which the OFDM sequence is transmitted in an on pulse) may be configured by the base station or specified in a specification. Alternatively, as illustrated in the example of 1101, the OFDM sequence 1104 corresponding to "1001" may be identically transmitted in all on pulses, thereby allowing the UE to receive the WUS at a desired on pulse location or allowing the UE to receive multiple identical signals to improve WUS reception capability, thereby obtaining an effect of repeated transmission. Therefore, as illustrated in the example of 1101, at the time of reception of the WUS, when N is greater than or equal to P (without considering a location of an on pulse), a minimum time required for the UE to receive the WUS is one reference time unit 1105.

In 1102 of FIG. 11, the number (N) of bits that may be indicated by an OFDM sequence transmitted in an on pulse is 2, which is smaller than the number (P) of bits to be transmitted through the WUS. As such, when N is smaller than P, the UE may determine information included in the WUS by receiving multiple OFDM sequences. In 1102, OFDM sequences including one piece of WUS information are transmitted during an interval corresponding to P/N × (reference time unit) 1106. Specifically, a first OFDM sequence transmitted by the transmitter corresponds to an OFDM sequence 1107 corresponding to first two bits "10" of the WUS, and a second OFDM sequence corresponds to an OFDM sequence 1108 corresponding to subsequent two bits "01" of the WUS.

However, a mapping order between bit information indicated by the OFDM sequence and bit information of the WUS may be changed according to a configuration or a method specified in a specification. That is, the two bits indicated by the first OFDM sequence 1107 and the two bits indicated by the second OFDM sequence 1108 may not be mapped to first and second bits to be transmitted by the transmitter and third and fourth bits to be transmitted by the transmitter, respectively (i.e., sequential mapping), but may be mapped in an interleaved form. For example, the two bits indicated by the first OFDM sequence 1107 may be the first and third bits to be transmitted by the transmitter, and the two bits indicated by the second OFDM sequence 1108 may be the second and fourth bits to be transmitted by the transmitter. However, the UE needs to know information related to interleaved mapping of the bits in advance. The interleaved mapping method may be equally applied not only to 1102, but also to 1101 and the examples of FIG. 12. As illustrated in 1102, the OFDM sequences indicating WUS information may be repeatedly transmitted (1109). Whether repeated transmission is performed may be configured by the base station or specified in a specification, and during repeated transmission, the UE may select the interval 1106 or 1109 to receive the WUS, or may receive all repeatedly transmitted WUSs to improve WUS reception capability.

FIG. 12 is a diagram illustrating an example of a method of transmitting and receiving identical information regardless of the type of a WUR by utilizing position information of an ON pulse in a reference time unit when multiple OFDM sequences are configured for WUS transmission.

Similar to FIG. 11, FIG. 12 may also include cases of 1201 and 1202 according to a relationship between P and N. In addition, since Manchester coding is applied, an on pulse and an off pulse may appear in every reference time unit 1203. However, a difference from FIG. 11 is that when the WUR-B (or a UE capable of distinguishing an OFDM sequence transmitted in an on pulse) obtains information of a WUS, the WUR-B uses even a position of an on pulse in which an OFDM sequence is transmitted at a corresponding time point 1204. Specifically, referring to 1201, the WUR-B receives an OFDM sequence 1205 indicating information of "00100" in a leading part of the first reference time unit 1204. If an appearance of the on pulse in a leading half part of the reference time unit 1204 indicates that information of "1" has been transmitted, the WUR-B may determine that entire information to be transferred by the WUS is "100100" by combining information (00100) of the received OFDM sequence and 1 indicated by the position of the on pulse.

The WUR-B receiving the WUS designed in FIGS. 11 and 12 determines whether a particular OFDM sequence is received during two pulse durations within a reference time unit. In FIG. 11, information on whether a signal is received in a pulse duration corresponding to a leading half part of the reference time unit or in a pulse duration corresponding to a trailing part is not used to infer the entire WUS information. In contrast, in FIG. 12, in which part of the reference time unit the signal is received (or a position of an on pulse within the reference time unit) indicates information, and the WUR-B may infer the entire WUS information including the information.

Therefore, as illustrated in 1201, when position information of an on pulse within a reference time unit is utilized, if N is greater than or equal to P-1 in the relationship between the number P of bits to be transmitted through the WUS and the number N of bits indicated by an OFDM sequence, the WUR may receive the WUS within only one reference time unit 1204. For example, if pulse position modulation (PPM) rather than Manchester coding is utilized, position information of the on pulse may indicate Y bits (Y>1) or more, and in this case, the UE may determine a WUS reception time, based on a relationship between P-Y and N. In addition, if N is greater than P-1, a part of information obtained based on the OFDM sequence may be used. For example, when a value of P is changeable, if the value of P becomes smaller than N-1, some of configured OFDM sequences may not be used during transmission and reception.

If an interval in which and a time point at which a UE having the WUR-B detects a WUS are configured only as one reference time unit 1204 or repeated transmission is not configured, the base station may transmit, in another non-configured interval 1206, a sequence unrelated to WUS information, such as transmitting an arbitrary OFDM sequence, and thus the UE is required not to perform a WUS reception operation during the corresponding interval.

When the UE combines information obtained based on the position of the on pulse within the reference time unit and information obtained through the OFDM sequence, an order of information bits may be determined differently from the above-described example, and it is assumed that the UE knows in advance how to combine the bit information. In addition, a combining method of the information bits may be associated with a time point at which the WUS is received. For example, when a particular OFDM sequence is transmitted in a second reference time unit, the OFDM sequence may indicate "10100," and information of "0" obtained through position information of the on pulse may be inserted into a second bit position of "10100," whereby information of "100100" may be obtained.

1202 is an example showing a case in which the value of N is smaller than P-1. In this case, the number of bits that may be transferred by one OFDM sequence is small. Therefore, the UE needs to receive the WUS during multiple reference time units 1207, and since the UE may utilize position information of the on pulse in one reference time unit, a minimum time during which the receiver needs to receive the WUS is P/(N+1) × (reference time unit) 1207. Referring to 1202, the UE may obtain information of "10" through position information of the on pulse in a first reference time unit and a second reference time unit (or obtains information of "1" and "0"), obtain information of "01" through an OFDM sequence 1209 transmitted in the first reference time unit, and obtain information of "00" through an OFDM sequence 1210 transmitted in the second reference time unit. By combining same, the UE may obtain "100100," and the obtained bits are the same as WUS transmission bits to be transmitted. If the base station does not perform repeated transmission, the WUR-B does not receive the WUS during an interval 1208. This is only one example, and it is assumed that a combining order between information obtained based on the position of each on pulse and information obtained from each OFDM sequence is configured by the base station or specified in a specification, so that the UE knows the combining order.

Specific terms used in the above example may be changed, and the methods described in the first embodiment may be used in combination with each other.

### <Second embodiment>

A second embodiment of the disclosure provides, among methods for transmitting a common wake-up signal regardless of a type of a wake-up receiver of a UE, a method for transmitting the common wake-up signal such that different information is received according to the type of the wake-up receiver of the UE.

At least a part of the content of the second embodiment may be combined with at least a part of the content described in the first embodiment, and may further include an overall WUS transmission/reception method.

According to the first embodiment, the WUR-B may obtain more bit information than the WUR-A during the same time. In the first embodiment, a WUS transmission/reception method enabling an increase of the number of bits received by the WUR-B during a unit time in order to obtain the same information regardless of a type of a WUR has been described. In the second embodiment, a method enabling acquisition of more information by utilizing an advantage of the WUR-B is described.

Representative information required to be commonly transmitted to the WUR-A and the WUR-B includes a wake-up ID indicating which UE (group) needs to wake up. However, in order to individually wake up all UEs in a cell by assigning an individual wake-up ID to each UE, there is a burden in that the number (P) of bits to be transmitted through a WUS increases. Accordingly, the base station may wake up a UE group in units of groups or subgroups. In this case, a group identifier commonly configured for the WUR-A and the WUR-B is referred to as a wake-up group ID. The wake-up group ID may be configured by the base station or may be derived by combining a formula specified in a specification and/or a UE-specific ID. In this case, examples of pieces of information which may be additionally provided to UEs having the WUR-B are as follows. However, at least one of the following examples may also correspond to pieces of information commonly transmitted regardless of a type of a WUR, and pieces of information commonly transmitted and pieces of information which may be additionally transmitted only to UEs having the WUR-B may be configured by the base station or specified in a specification.
wake-up subgroup ID: an identifier assigned such that a smaller number of UEs may configure a subgroup among UEs having the same group ID
tracking reference signal (TRS) information: information indicating a TRS resource set which may be used when a main radio is woken up and then receives a signal, or may be used as a synchronization signal of the WUR-B, only for UEs receiving a WUS among UEs in RC_INACTIVE and RRC_IDLE states
short message information: short message information included in a PDCCH scrambled by a P-RNTI Dedicated paging occasion: This is information transmitted when there is a dedicated paging occasion for a corresponding UE (group), rather than an interval defined in an existing specification, when a main radio is woken up by a WUS and then receives a paging signal. For example, the information may indicate time offset information indicating a dedicated paging occasion shifted earlier than an existing paging occasion, but is not limited to the example.

One of methods by which the WUR-B additionally receives the examples listed above or other pieces of information not described as an example is that a base station maps and transmits an OFDM sequence associated with corresponding information in another interval (e.g., 1206 and 1208 in FIG. 12) in which a WUS is not transmitted, other than a minimum interval (e.g., 1105 and 1106 of FIG. 11 and 1204 and 1207 of FIG. 12) in which the WUR-B is defined to receive a WUS, and the WUR-B receives the OFDM sequence associated with the corresponding information. For example, in order to indicate TRS information corresponding to "10," the base station may transmit an OFDM sequence corresponding to "10" in a reference time unit immediately following an interval in which a WUS is transmitted.

In addition, an example of the short message information in the above example is described. After waking up the main radio due to a WUS, when a PDCCH scrambled by a P-RNTI, which the main radio needs to receive, transmits only a short message or includes a short message, the base station may transmit a short message indication and a short message, which UEs need to wake up the main radio and receive, by including same in WUS information. Bit information corresponding to the short message is transmitted through a corresponding OFDM sequence, and it is assumed that the UE knows in advance in which interval the OFDM sequence corresponding to the short message information is to be transmitted. For example, information (short message indication) indicating whether a short message exists is transmitted an interval immediately subsequent to an interval in which wake-up information of a main radio (through a WUS) is transmitted, and if the short message indication is 1, bit information corresponding to the content of the short message may be transmitted in a next interval. When the UE receives a WUS and identifies whether a short message exists and the content thereof, the UE does not need to wake up the main radio in order to receive a PDCCH transmitting the short message. Accordingly, omission of state transition of the main radio and PDCCH reception may help UEs having the WUR-B, which consume relatively large power, reduce power consumption.

In a case of the TRS information, the base station may help UEs in an RRC_INACTIVE state or an RRC_IDLE state easily perform synchronization, based on a corresponding TRS by indicating TRS resource information configured for another RRC_CONNECTED UE. Accordingly, the TRS information may not always be transmitted. When whether additional information is transmitted is irregular as described above, information corresponding to a field "00" indicating that the information has not been transmitted may be transmitted.

In a case of the wake-up subgroup ID, as described above, a wake-up group ID commonly transmitted regardless of a type of a WUR may first be transmitted (through a WUS), and the wake-up subgroup ID may be transmitted in another interval. As another method, when wake-up information for a specific UE group is to be transmitted during a specific reference time unit interval, an OFDM sequence mapped to the specific reference time interval may indicate a subgroup ID. For example, referring to FIG. 12, when it is assumed that information indicating whether to wake up a UE group having a wake-up group ID of 1 is mapped to the first reference time unit 1204 in 1201, the position of an on pulse is located in a leading part of the reference time unit and thus this may indicate that group 1 needs to wake up (i.e., the wake-up group ID may be obtained based on the position of the on pulse). In this case, through an OFDM sequence transmitted in the on pulse, it may be interpreted that, among UEs of group 1, UEs having a wake-up subgroup ID of "00100" need to wake up. In the above example, when the number of supported subgroups is 1 and the number of OFDM sequences mapped to the on pulse is 1, it may be interpreted that the UE operates identically to a case in which only one OFDM sequence mapped to an on pulse is defined in the first embodiment. In addition, in the above example, when the number of supported subgroups is 1 and an OFDM sequence mapped to the on pulse is selected and transmitted from among two OFDM sequences according to whether information transmitted at a reference time is 1 or 0, the UE may operate identically to the example in which N is 1 in FIG. 11.

The specific terms used in the above example may be changed, and the content of the disclosure is not limited by a specific example. According to at least an embodiment of the disclosure, by transmitting a WUS such that a common WUS may be received regardless of a type of a WUR, there is a technical effect in that a degree of freedom of a WUS reception method of a UE may be increased while a burden of WUS transmission of a base station may be reduced. At least one method of the first embodiment and/or the second embodiment of the disclosure may be used in combination.

### <Third embodiment>

A third embodiment of the disclosure provides a method for configuring a parameter for WUS reception for UEs having different WUS reception methods existing or capable of existing in a cell.

The parameter described in the third embodiment of the disclosure is described based on parameters specified in the first embodiment and/or the second embodiment of the disclosure, but may also include other parameters according to examples not specifically specified.

The WUR types specified in the first embodiment and/or the second embodiment of the disclosure, that is, the WUR-A and the WUR-B, respectively refer to a UE (or WUS receiver) capable of receiving only an OOK signal represented by an on/off pulse and a UE capable of receiving an OFDM sequence mapped to a WUS. A UE may be equipped with both the WUR-A and the WUR-B and thus may operate by selecting one of the WUR-A and the WUR-B according to a preference of the UE, is selected and operated, or may be configured by the base station to perform a specific operation. Which WUR the UE includes, which operation of the WUR is possible, and the like may be reported by the UE to the base station as one type of capability of the UE, or the base station may transmit a WUS without knowing which capability the UE has. In the following description, a UE capable of receiving only a WUS receivable through the WUR-A is referred to as a WUS-OOK-capable UE, and a UE receiving only a WUS receivable through the WUR-B is referred to as a WUS-OFDM-capable UE. Additionally, a UE capable of performing both an operation of the WUR-A and an operation of the WUR-B according to a preference of the UE or a configuration of the base station is referred to as a WUS-both-capable UE.

Provided are the following pieces of information which the base station needs to necessarily configure for a UE which is to commonly receive a WUS or is likely to have a capability to receive same or which are required to be specified in a specification in order to support the techniques described in the disclosure. The following pieces of information may be directly provided, or the UE may indirectly determine the information by combining same with other pieces of information.
frequency resource in which common WUS is transmitted: information on a subcarrier range to which information indicating the WUS is to be mapped in a specific band or BWP in which the WUS is transmitted may be configured. Not only a position in a frequency band but also a band size available for the WUS are pre-defined or configured by the base station.
time point at which common WUS is transmitted: information on a time point at which WUS transmission may start may be provided. An interval in which the WUS may be transmitted may repeatedly appear, and in this case, period information (and offset information) is also configured. In addition, in a 5G system, a time point at which a common WUS is transmitted may be determined in units of OFDM symbols, which are basic time units. For example, a WUS may be transmitted according to the same period (D) as a DRX cycle, and when a common WUS is transmitted starting from an n-th OFDM symbol after a specific time elapses after reception of WUS transmission activation information from the base station, the UE may perform a WUS reception operation every period D thereafter. The operation may be repeatedly performed until WUS transmission is deactivated by the base station or it is determined that a WUS reception capability does not satisfy a specific reference value.
pulse duration (X) of common WUS: this information is time information serving as a criterion when a WUR determines whether a received pulse is an on pulse or an off pulse, or determines whether an OFDM sequence has been transmitted within a specific interval. When a WUS is transmitted, the WUS is required to be generated and transmitted such that the entire power in one pulse duration is equal to or greater than a specific value (on pulse) or is approximate to 0 (off pulse), thereby reducing an error of a receiver in determining whether the pulse is an on pulse or an off pulse. The corresponding information may be directly configured by the base station from among multiple candidates specified in a specification, or may be determined based on a subcarrier spacing used for the WUS and the number (K) of pulses in one OFDM symbol. For example, when a subcarrier spacing is 15 kHz and K is 1, 14 OFDM symbols and a CP are transmitted during 1 ms, and one pulse is transmitted in one OFDM symbol, and thus it may be considered that a time taken to transmit one pulse has a pulse duration of 1/14 ms.

The corresponding information may also be expressed as a pulse rate, which is a reciprocal of the pulse duration. In the above example, the pulse rate is 14 kHz. As another example, when a subcarrier spacing is 30 kHz and K is 2, 28 OFDM symbols and a CP are transmitted during 1 ms, and two pulses are transmitted in one OFDM symbol, and thus the pulse rate may be 56 kHz. In this case, the WUS may directly use, as the subcarrier spacing, a subcarrier spacing used in a corresponding band or BWP, or a subcarrier spacing for the WUS may be separately configured.
number (K) of pulses in one OFDM symbol: K may be used to determine a pulse duration or a pulse rate of a common WUS as described in the above example. In addition, by using the corresponding information, the UE may identify after reception of how many pulses a position of a CP added to a front portion of an OFDM symbol appears. That is, when initially receiving a WUS, the UE may receive the WUS while disregarding a CP of a first OFDM symbol, and after receiving K pulses, the UE may expect that a CP added to a front portion of a next OFDM symbol exists, remove the CP portion, and receive a signal, thereby reducing an error due to the CP. The base station may indicate the corresponding information by configuring one value from among multiple candidates, and when a value is not indicated, a value defined as a default (e.g., K=1) is used for operation. In addition, when K is configured as 1 and when K is configured as a value equal to or greater than 2, different subcarrier spacing values may be associated and configured. For example, a pulse duration X value when a subcarrier spacing is 60 kHz and K is equal to 1 (K=1) and an X value when a subcarrier spacing is 30 kHz and K is equal to 2 (K=2) may be identically configured, but the position and effect of a CP may be different. Accordingly, when a K value changes, information on which subcarrier spacing is associated therewith or a change in a subcarrier spacing value may also be provided.
number (P) of entire information bits transmitted through common WUS: this information is associated with information obtained from the WUS, that is, a size of a payload. The size of the payload may be specified in a specification or may be configured by the base station. Alternatively, rather than the payload size being directly configured, the UE may infer the entire payload size and estimate the number of information bits through values of parameters related to pieces of information included in the common WUS, such as the number of wake-up groups or subgroups, from the base station. In this case, the entire information bits refer to information transferred regardless of a capability of the UE, that is, commonly transferred to all of a WUS-OOK-capable UE, a WUS-OFDM-capable UE, and a WUS-both-capable UE. In addition, when a WUS-OFDM-capable UE and a UE operating with the WUR-B among WUS-both-capable UEs are configured or specified to receive CRC bits, a sum of the payload size and the number of CRC bits is the number of entire information bits.
whether Manchester coding is applied: this information is required for determining a method by which a receiver determines whether information included in a WUS is 1 or 0 when receiving the information. In addition, when Manchester coding is applied, two pulses are used to transmit one information bit, and thus a time interval required to receive the entire WUS may be inferred in association with values of P and X. Details may be referred to in the first embodiment. In addition, as described in the first embodiment, the methods according to FIGS. 11 and 12 are unavailable when Manchester coding is not applied because it is uncertain when and how many on pulses occur. Accordingly, depending on whether Manchester coding is applied, the UE may determine whether a method according to FIGS. 11 and 12 is used or whether only one sequence is used as in the first example of the first embodiment.
whether CRC bits are applied and length thereof: this information is applied to reduce a probability of false detection of a WUS by a WUS-OOK-capable UE or a UE operating with the WUR-A among WUS-both-capable UEs, and when CRC bits are applied, the UE receives the WUS during an interval longer by the number of the bits.
techniques for improving WUS reception performance, such as repeated transmission and interleaving transmission, and related configurations: these pieces of information may be applied to increase coverage of a WUS-OOK-capable UE or a UE operating with the WUR-A among WUS-both-capable UEs and thereby reduce a probability of missed detection of a WUS. For example, a WUS-OFDM-capable UE and a UE operating with the WUR-B among WUS-both-capable UEs may not perform repeated reception or interleaving reception. Alternatively, different repeated transmission or interleaving techniques may be applied to a WUS-OOK-capable UE or a UE operating with the WUR-A among WUS-both-capable UEs and a WUS-OFDM-capable UE or a UE operating with the WUR-B among WUS-both-capable UEs.

In addition to the pieces of information listed above, the following information may be required for a WUS-OFDM-capable UE and a UE operating with the WUR-B among WUS-both-capable UEs.
number (N) of information bits that one OFDM sequence is capable of transmitting (or indicating): an OFDM sequence set that may be used for a WUS may be specified in a specification or may be configured by the base station. Alternatively, the base station may directly configure a specific subset from an entire set specified in the specification, and the UE may indirectly infer which sequences are used through a configured N value or another parameter. When the UE knows the N value, the UE may identify, as described in FIGS. 11 and 12, a time interval during which the WUS needs to be received according to whether position information of an on pulse is used. That is, under the assumption that Manchester coding is applied, when position information of an on pulse is not used as in FIG. 11, the UE is required to receive the WUS during a time corresponding to $\frac{P}{N} \times 2 X$. When position information of an on pulse is used as in FIG. 12, the UE is required to receive the WUS during a time corresponding to $\frac{P}{N + 1} \times 2 X$. Accordingly, under the assumption that CRC is applied in all cases or is not applied in any case, the WUR-B may reduce the WUS reception time by a factor of N or N+1, compared to UEs that have the same reception capability as the WUR-A required to receive the WUS during a time of 2PX.
WUS reception interval including location to which OFDM sequence for corresponding UEs is mapped in common WUS: in addition to a method of inferring a WUS reception interval through the above-described information N, a method in which a WUS reception interval only for corresponding UEs (or time and/or frequency resources in which a WUS for specific UEs is transmitted) is indicated, and the UE infers N through the indicated interval may also be considered. Alternatively/additionally, information indicating a location at which a WUS for corresponding UEs is transmitted in an entire interval in which a common WUS is received may be obtained. Such information may be specified in a specification and/or configured by the base station. For example, the UE may determine a location to which an OFDM sequence for specific UEs is mapped based on a first reference time unit in which a common WUS is transmitted, and the base station may arbitrarily adjust the mapped location by configuring a specific offset value. When the corresponding value is not configured, the offset value may be regarded as 0. Alternatively, as in the example of FIG. 11, identical OFDM sequences may be repeatedly transmitted in an interval in which a common WUS is transmitted. The base station may turn on/off the corresponding function, and when on/off is not configured, a default operation specified in a specification is performed.
when additional information may be transmitted only for corresponding UEs, additional transmitted information and method of receiving the information: when additional information is transmitted as in the example described in the second embodiment, information indicating when and where the information is transmitted needs to be directly or indirectly provided. Which information is to be provided may be specified in a specification or configured by the base station, and details is referred to in the second embodiment.

In addition to the information described above, every UE receiving a common WUS needs to know which wake-up ID and/or wake-up group ID the UE has, and the IDs are associated with which OFDM sequence the UE needs to receive. However, a method of generating an OFDM sequence indicating a specific ID and a type of OFDM sequence used (e.g., an M-sequence or a Gold sequence) do not fall within the scope of this specification, and thus are not described in detail.

Since the pieces of information listed above are directly or indirectly associated with one another, not all pieces of information are directly configured for the UE or pre-defined. According to the above-described relationships, only some pieces of information may be directly configured by the base station or specified. Based on the acquired some pieces of information, the UE may infer other pieces of information. A method by which the UE performs the inference is not limited to the examples described above.

Since not only capabilities of UEs receiving a WUS in a cell but also RRC states thereof are different, parameter configuration methods may be variously provided as follows.
Method 1: assigning the same RRC configuration regardless of a capability of the UE
Method 2: assigning different RRC configurations according to a capability of the UE
Method 3: assigning an additional RRC configuration set according to a capability of the UE

In the case of Methods 1 and 3, even when the base station does not know a capability of the UE, the UE may perform an appropriate operation from a given RRC configuration according to a capability of the UE. In the case of Method 2, the base station needs to know a capability of a UE in order to assign a configuration to the UE, but a UE-specific configuration is possible. Accordingly, for a UE receiving a WUS in an RRC_CONNECTED state, the corresponding method may be considered. That is, even for the same UE, an RRC configuration related to a WUS may be assigned through a different method according to an RRC state, and a corresponding configuration value may be different or may be configured with a different parameter combination.

In the case of Method 1, since the same types of RRC parameters are configured regardless of a capability of the UE, the UE uses a necessary parameter according to a WUS reception method of the UE and disregards an unnecessary parameter.

In the case of Method 3, RRC parameters commonly used regardless of a capability of the UE exist in a common set. As an example, among the information items described above, information from common WUS monitoring resource information to whether Manchester coding is applied may be included as common information. In addition, information corresponding to a WUS-OOK-capable UE and information corresponding to a WUS-OFDM-capable UE are configured to be included in different sets, respectively. A difference from Method 2 is that, according to Method 2, information corresponding to a WUS-OFDM-capable UE is not able to be configured for a WUS-OOK-capable UE at all, whereas according to Method 3, the information is included in another set. With such a configuration, a WUS-both-capable UE may select whether to use information of a configuration set corresponding to a WUS-OOK-capable UE or information corresponding to a WUS-OFDM-capable UE according to which WUS reception operation the WUS-both-capable UE is to perform. In this case, taking an example by using the above-described items, a configuration set corresponding to a WUS-OOK-capable UE may include CRC information and configuration information on techniques for improving the WUS reception capability, such as repeated transmission or interleaving transmission. A configuration set corresponding to a WUS-OFDM-capable UE may include, in addition to the pieces information listed above, pieces of configuration information for a WUS-OFDM-capable UE and a UE operating with the WUR-B among WUS-both-capable UEs.

The specific terms used in the above example may be changed, and the content of the disclosure is not limited by an example described in the disclosure. At least one method of the first embodiment, the second embodiment, and/or the third embodiment of the disclosure may be used in combination.

### <Fourth embodiment>

A fourth embodiment of the disclosure provides a procedure of a base station and a UE at the time of transmission and reception of a common wake-up signal and an operation procedure of the base station and the UE after transmission and reception of the wake-up signal.

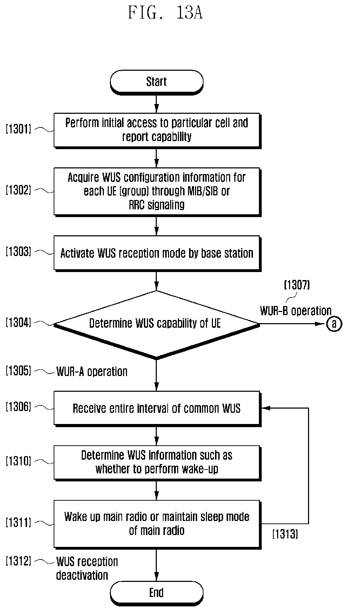

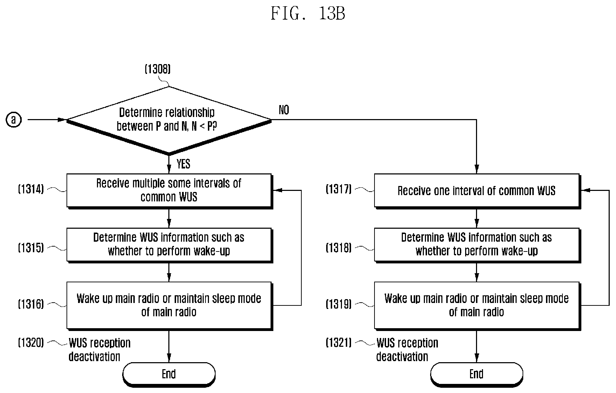

FIG. 13A and FIG. 13B are diagrams illustrating an example of an operation of a UE receiving a common wake-up signal (WUS).

Referring to FIG. 13, UEs capable of receiving a WUS report a WUS-related capability (1301). However, this operation may be omitted according to an RRC state of the UE, and it may be assumed that a base station configures and transmits a WUS without accurately knowing the WUS-related capability of the UE. The UE acquires WUS configuration information, for example, as described in the third embodiment (1302). Particular information may be configured through system information such as an MIB/SIB, and other information may be configured through RRC signaling. In some cases, a WUS reception operation may be activated immediately after a WUS is configured (1303), whereas in other cases, the WUS reception operation may be activated through particular signaling. Whether the base station has activated WUS transmission may also be included in the information configured in operation 1302.

Before receiving a common WUS, the UE determines a WUS capability corresponding to the UE (1304). In the case of a WUS-OOK-capable UE or a UE that performs the same operation as the WUS-OOK-capable UE among WUS-both-capable UEs, that is, a UE performing a WUR-A operation (1305), the UE receives a WUS in an entire interval in which the common WUS is transmitted, based on the information configured in operation 1302 (1306).

Meanwhile, in the case of a WUS-OFDM-capable UE or a UE that performs the same operation as the WUS-OFDM-capable UE among WUS-both-capable UEs, that is, a UE performing a WUR-B operation (1307), the UE determines a relationship between the number P of information bits transmitted through the common WUS and the number N of bits that one OFDM sequence is capable of transmitting (1308). Definitions of P and N and examples of equations representing a relationship between P and N according to an information mapping method follow the first embodiment to the third embodiment. In FIG. 13, with reference to the example of FIG. 11, an equation for determining the relationship between P and N is described as N < P.

When the value of N is less than P, an amount of information that one OFDM sequence is capable of transferring is limited, and thus the UE may receive information corresponding to the common WUS during multiple reference time units (1314). When N is equal to or greater than P, the UE receives the information corresponding to the common WUS in one reference time unit (1317). However, whether the information is received during multiple time units or one time unit may vary depending not only on the relationship between N and P but also on whether there is information additionally transferred to a UE operating with the WUR-B, or whether repeated reception or the like is configured for the UE, and a method through which the WUS transfers information.

For example, when y-th bit information configuring a payload of the WUS indicates, as 1 or 0, whether to wake up a y-th UE group, UEs having a capability of receiving the WUR-B are required to receive information only in one interval in which a bit corresponding to a group of the UEs is transmitted. In this case, when a subgroup is defined for the UE receiving the WUR-B, a sequence transmitted in the corresponding interval may indicate which subgroup within the group is woken up. Otherwise, the UE may receive only one interval in the common WUS even when only one sequence or two sequences respectively indicating 1 and 0 are defined.

When the UE receives the WUS through operation 1306, 1314, or 1317, all UEs having received the common WUS determine information obtained from the WUS (1310, 1315, and 1318). Basically, the UE determines whether the UE needs to turn on a main radio and receive particular information. Thereafter, based on the received information, the UE performs an operation such as waking up the main radio or maintaining a sleep mode (1311, 1316, and 1319). When the UE maintains the sleep mode, the UE may repeat operation 1306, 1314, or 1317 of receiving the common WUS and the subsequent operations. When the UE is indicated, through the received WUS, to wake up the main radio or perform another operation, the UE may, after completing the corresponding operation, repeat operation 1306, 1314, or 1317 and the subsequent operations from a particular time point specified by the base station or a specification until WUS transmission of the base station is deactivated (1312, 1320, and 1321).

The above-described flowchart illustrates an example method that may be implemented according to principles of the disclosure, and various modifications may be made to the method illustrated in the flowchart of the specification. For example, although illustrated as a series of operations, various operations in each drawing may overlap, occur in parallel, occur in a different order, or occur multiple times. In another example, an operation may be omitted or replaced with another operation.

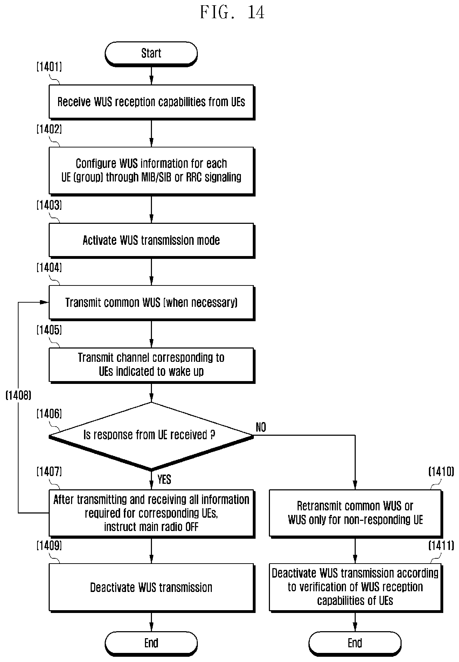

FIG. 14 is a diagram illustrating an example of an operation of a base station transmitting a common wake-up signal.

Referring to FIG. 14, a base station receives reports of WUS reception capabilities of UEs (1401). However, the base station may know capabilities of all UEs, or there may exist an UE of which the base station does not know a capability according to an RRC state of the UE. For example, regarding a capability of an RRC_IDLE UE, when the UE has no previous connection history with the base station, or even when the UE has previously connected to the base station, if the base station does not know whether the UE is camped on a cell operated by the base station, the base station may not accurately know WUS capabilities of corresponding UEs.

The base station configures WUS information in consideration of an RRC state of a UE and the like (1402). The corresponding information and a configuration method thereof are described in detail in the third embodiment, and the embodiment describes examples, and the content of the disclosure is not limited to the described examples. Whether a WUS transmission mode has been activated may be included in the corresponding configuration information, and thus the WUS transmission mode may be activated immediately when the configuration information is configured, or the WUS transmission mode may be activated through separate signaling (1403). When the WUS transmission mode of the base station is activated, the base station transmits a common WUS at every common WUS transmission time point or when information to be transferred through the WUS exists (1404). If the base station does not wake up any UE group, the base station may not transmit the WUS.

After transmitting the common WUS, the base station assumes that all corresponding UEs have received the WUS and transmits a channel required to be received by a UE that has woken up a main radio (1405). For example, when the base station has transmitted a WUS for an RRC_IDLE or an RRC_INACTIVE UE(s) monitoring paging information, the base station transmits a PDCCH scrambled by a P-RNTI at a paging occasion predefined in a specification. In this case, after awakened UEs receive a particular channel, there may be a case in which no response from the UE is required and a case in which a response is required. The base station determines whether a response from the UE is required and whether a response from the UE has been received (1406).

Even when a response from the UE is not required, operation 1407 is performed as in a case in which a response is required. After transmitting and receiving all information transmitted by the base station, the base station may directly configure, through signaling, that the UE turns off the main radio and repeats a WUS operation. Alternatively, the base station may configure when the UE turns off the main radio and repeats the WUS operation, or a specification may specify that such an operation is performed. When the UE needs to repeat a WUS reception operation, the base station also repeats an operation of transmitting the common WUS and a series of subsequent operations (1408).

The case in which a response from the UE is required may correspond to, for example, a case where paging information instructs RRC connection and thus the UE needs to transmit a PRACH. When a response is received in the corresponding case, operation 1407 and subsequent operations are performed in the same manner as described above. In the corresponding case, the operations are repeated until the base station determines to deactivate WUS transmission (1409) and signals the determination to UEs (1408).

When a response from the UE is required but no response is received from the UE, the base station may retransmit the common WUS, or when transmission of a WUS only for the non-responding UE is possible, the base station may transmit the corresponding WUS (1410). When the WUS has been repeatedly transmitted for a predetermined number of times and no response is received, the UE may be determined to be in a state in which connection with the base station transmitting the WUS is not possible. If the UE that has not responded to the WUS performs a fallback operation pre-configured or specified in a specification to wake up a main radio and report, to the base station, information indicating that the UE has failed to properly receive the WUS, the base station may configure deactivation of WUS transmission for the corresponding UE or all UEs, based on content reported by the UEs (1411).

The above-described flowchart illustrates an example method that may be implemented according to principles of the disclosure, and various modifications may be made to the method illustrated in the flowchart of the specification. For example, although illustrated as a series of operations, various operations in each drawing may overlap, occur in parallel, occur in a different order, or occur multiple times. In another example, an operation may be omitted or replaced with another operation.

The disclosure is not limited by the content described with reference to FIGS. 13 and 14, and the content of FIGS. 13 and 14 may be combined with the first embodiment, the second embodiment, and/or the third embodiment. In addition, the disclosure may be performed even when each operation of FIGS. 13 and 14 is omitted, another operation is added, or an order of operations is changed.

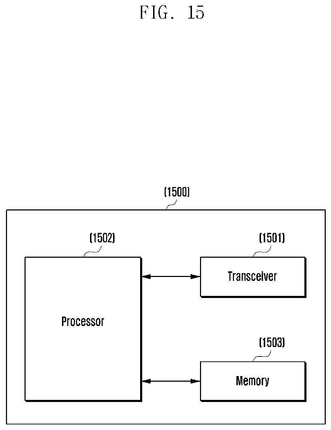

FIG. 15 is a block diagram illustrating a structure of a UE according to an embodiment of the disclosure. Referring to FIG. 15, the UE 1500 may include a transceiver 1501, a controller (e.g., processor) 1502, and a storage (e.g., memory) 1503. The transceiver 1501, the controller 1502, and the storage 1503 of the UE 1500 may operate according to at least one or combinations of methods corresponding to the above-described embodiments. However, components of the UE 1500 are not limited to the illustrated example. According to another embodiment, the UE 1500 may include a larger or smaller number of components than the above-described components. Furthermore, in a specific case, the transceiver 1501, the controller 1502, and the storage 1503 may be implemented in the form of a single chip. According to an embodiment, the transceiver 1501 may include a transmitter and a receiver. The transceiver 1501 may transmit/receive signals with base stations. The signal may include control information and data. The transceiver 1501 may include an RF transmitter configured to up-convert and amplify the frequency of transmitted signals, and an RF receiver configured to low-noise-amplify received signals and down-convert the frequency thereof. The transceiver 1501 may receive signals through a radio channel, output the same to the controller 1502, and transmit signals output from the controller 1502 through the radio channel.

The controller 1502 may control a series of processes so that the UE 1500 can operate according to the above-described embodiments of the disclosure. For example, the controller 1502 may perform or control the operation of the UE for performing at least one or combination of the methods according to embodiments of the disclosure. controller 1502 may include at least one processor. For example, the controller 1502 may include a communication processor (CP) which performs control for communication and an application processor (AP) which controls upper layers (e.g.., applications).

The storage 1503 may store control information (e.g., configuration information of a WUS configured for the UE 1500) or data, and may have a region for storing data necessary for control of the controller 1502 and data generated during control by the controller 1002.

Although not illustrated, the UE 1500 may further include a WUR. The WUR may be included in the transceiver 1501 or may exist as a separate receiver.

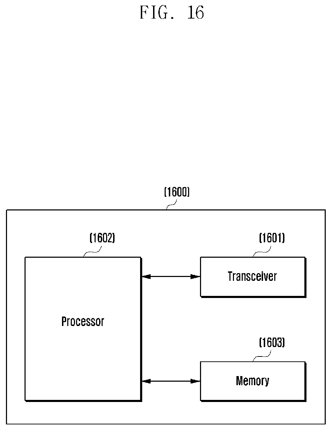

FIG. 16 is a block diagram illustrating a structure of a base station according to an embodiment of the disclosure.

Referring to FIG. 16, the base station 1600 may include a transceiver 1601, a controller (e.g., processor) 1602, and a storage (e.g., memory) 1603. The transceiver 1601, the controller 1602, and the storage 1603 of the base station 1600 may operate according to at least one or combinations of methods corresponding to the above-described embodiments. However, components of the base station 1600 are not limited to the above-described example. According to another embodiment, the base station 1600 may include a larger or smaller number of components than the above-described components. Furthermore, in a specific case, the transceiver 1601, the controller 1602, and the storage 1603 may be implemented in the form of a single chip.

According to an embodiment, the transceiver 1601 may include a transmitter and a receiver. The transceiver 1601 may transmit/receive signals with UEs. The signal may include control information and data. The transceiver 1601 may include an RF transmitter configured to up-convert and amplify the frequency of transmitted signals, and an RF receiver configured to low-noise-amplify received signals and down-convert the frequency thereof. The transceiver 1601 may receive signals through a radio channel, output the same to the controller 1602, and transmit signals output from the controller 1602 through the radio channel.

The controller 1602 may control a series of processes so that the base station 1600 can operate according to the above-described embodiments of the disclosure. For example, the controller 1602 may perform or control the operation of the base station for performing at least one or combinations of the methods according to embodiments of the disclosure. The controller 1602 may include at least one processor. For example, the controller 1602 may include a communication processor (CP) which performs control for communication and an application processor (AP) which controls upper layers (e.g., applications). The storage 1603 may store control information (e.g., configuration information of a WUS), data, and control information or data received from the UE, and may have a region for storing data necessary for control of the controller 1602 and data generated during control by the controller 1602.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a communication system, the method comprising:
receiving a wake-up signal (WUS) transmitted from a base station;
obtaining WUS information, based on the received WUS; and
waking up a main radio receiver or maintaining a sleep mode of a main radio, based on the WUS information,
wherein the WUS is configured for an on-off keying (OOK)-based wake-up receiver (WUR) and an orthogonal frequency division multiplexing (OFDM)-based WUR.

2. The method of claim 1, wherein Manchester coding is applied to the WUS.

3. The method of claim 1, wherein one or M OOK pulses of the WUS are included within an OFDM symbol duration, and
wherein M includes 2 and 4.

4. The method of claim 1, wherein the WUS is based on a particular OFDM sequence within a pulse duration corresponding to an on pulse, and
wherein the particular OFDM sequence is configured by the base station or is one sequence in an OFDM sequence set.

5. A method performed by a base station in a communication system, the method comprising:
determining whether to transmit wake-up signal (WUS) information to a terminal through a WUS; and
in case that the WUS is required to be transmitted, transmitting a WUS corresponding to the WUS information to the terminal,
wherein the WUS information is related to whether to wake up a main radio receiver of the terminal or maintain a sleep mode of a main radio, and
wherein the WUS is configured for an on-off keying (OOK)-based wake-up receiver (WUR) and an orthogonal frequency division multiplexing (OFDM)-based WUR.

6. The method of claim 5, wherein Manchester coding is applied to the WUS.

7. The method of claim 5, wherein one or M OOK pulses of the WUS are included within an OFDM symbol duration, and
wherein M includes 2 and 4.

8. The method of claim 5, wherein the WUS is based on a particular OFDM sequence within a pulse duration corresponding to an on pulse, and
wherein the particular OFDM sequence is configured by the base station or is one sequence in an OFDM sequence set.

9. A terminal in a communication system, the terminal comprising:
a transceiver; and
a controller,
wherein the controller is configured to:
receive a wake-up signal (WUS) transmitted from a base station;
obtain WUS information, based on the received WUS; and
wake up a main radio receiver or maintain a sleep mode of a main radio, based on the WUS information, and
wherein the WUS is configured for an on-off keying (OOK)-based wake-up receiver (WUR) and an orthogonal frequency division multiplexing (OFDM)-based WUR.

10. The terminal of claim 9, wherein Manchester coding is applied to the WUS.

11. The terminal of claim 9, wherein one or M OOK pulses of the WUS are included within an OFDM symbol duration, and
wherein M includes 2 and 4.

12. The terminal of claim 9, wherein the WUS is based on a particular OFDM sequence within a pulse duration corresponding to an on pulse, and
wherein the particular OFDM sequence is configured by the base station or is one sequence in an OFDM sequence set.

13. A base station in a communication system, the base station comprising:
a transceiver; and
a controller,
wherein the controller is configured to:
determine whether to transmit wake-up signal (WUS) information to a terminal through a WUS; and
in case that the WUS is required to be transmitted, transmit a WUS corresponding to the WUS information to the terminal,
wherein the WUS information is related to whether to wake up a main radio receiver of the terminal or maintain a sleep mode of a main radio, and
wherein the WUS is configured for an on-off keying (OOK)-based wake-up receiver (WUR) and an orthogonal frequency division multiplexing (OFDM)-based WUR.

14. The base station of claim 13, wherein Manchester coding is applied to the WUS,
wherein one or M OOK pulses of the WUS are included within an OFDM symbol duration, and
wherein M includes 2 and 4.

15. The base station of claim 13, wherein the WUS is based on a particular OFDM sequence within a pulse duration corresponding to an on pulse, and
wherein the particular OFDM sequence is configured by the base station or is one sequence in an OFDM sequence set.
